# EUROPEAN PATENT APPLICATION

(11) **EP 4 691 769 A1**
(43) Date of publication of application: **11.02.2026**
(21) Application number: 24779796.2
(22) Date of filing: 21.03.2024
(51) Int. Cl.: B32B 27/10, B32B 27/30, B32B 27/32, B65D 65/40, C08L 23/00, C08L 33/06, C08L 51/06

(54) **LAMINATE AND PACKAGING MATERIAL**

(30) Priority: 28.03.2023 JP 2023050757
(71) Applicant: Mitsui Chemicals, Inc., Tokyo 104-0028 (JP)
(72) Inventor: YAGI, Toru, Sodegaura-shi, Chiba 299-0265 (JP); NAKAGAWA, Toshihiko, Sodegaura-shi, Chiba 299-0265 (JP); ENDO, Shoko, Sodegaura-shi, Chiba 299-0265 (JP); FUKUDA, Kazuyuki, Sodegaura-shi, Chiba 299-0265 (JP); KAGAWA, Yasuyuki, Tokyo 104-0028 (JP); YOSHIMURA, Toshihiro, Tokyo 104-0028 (JP); KUSUMOTO, Masaya, Sodegaura-shi, Chiba 299-0265 (JP)
(74) Representative: Hoffmann Eitle
(86) International application number: PCT/JP2024/010896
(87) International publication number: WO 2024/203673

(57) **Abstract**

A laminate 1 includes a paper substrate 2, a filling layer 3, and a gas barrier layer 4. The filling layer 3 is disposed on at least one side of the paper substrate 2. The gas barrier layer 4 is disposed on at least one side of the filling layer 3. The filling layer 3 contains a polyolefin resin and a (meth)acrylic resin.

## Description

### TECHNICAL FIELD

The present invention relates to a laminate and a packaging material, to be specific, to a laminate including a filling layer and a gas barrier layer.

### BACKGROUND ART

Conventionally, a laminate including a paper substrate, a filling layer, and a gas barrier layer has been known. Such a laminate is, for example, used as a packaging material.

As the laminate, more specifically, a barrier paper below is proposed. The barrier paper includes a paper substrate layer, a fixed filling layer, and a gas barrier layer. More specifically, any one of a styrene-acrylic copolymer aqueous emulsion and a polyethylene-based resin aqueous emulsion is coated onto the paper substrate, thereby forming the fixed filling layer. Further, a urethane-based hybrid gas barrier resin composition is coated onto the fixed filling layer, thereby forming the gas barrier layer (ref: for example, Patent Document 1 (Examples A13 to 15 and Comparative Examples A10 to 21)).

### Citation List

### Patent Document

Patent Document 1: Japanese Unexamined Patent Publication No. 2022-155999

### SUMMARY OF THE INVENTION

### PROBLEM TO BE SOLVED BY THE INVENTION

On the other hand, the barrier paper is required to have both excellent handleability and excellent bending resistance in accordance with its application.

The present invention provides a laminate and a packaging material which have both excellent handleability and excellent bending resistance.

### MEANS FOR SOLVING THE PROBLEM

The present invention [1] includes a laminate including a paper substrate, a filling layer disposed on at least one side of the paper substrate, and a gas barrier layer disposed on at least one side of the filling layer, wherein the filling layer contains a polyolefin resin and a (meth)acrylic resin.

The present invention [2] includes the laminate described in the above-described [1], wherein a content ratio of the polyolefin resin is 6% by mass or more and 94% by mass or less and the content ratio of the (meth)acrylic resin is 6% by mass or more and 94% by mass or less with respect to the total amount of the polyolefin resin and the (meth)acrylic resin.

The present invention [3] includes the laminate described in the above-described [1] or [2], wherein a glass transition temperature of the (meth)acrylic resin is -60°C or more and 10°C or less.

The present invention [4] includes the laminate described in any one of the above-described [1] to [3], wherein the gas barrier layer contains a gas barrier resin.

The present invention [5] includes the laminate described in the above-described [4], wherein the gas barrier resin contains a gas barrier polyurethane resin.

The present invention [6] includes the laminate described in the above-described [5], wherein the gas barrier polyurethane resin contains a reaction product of an isocyanate group-terminated prepolymer and a chain extender, the isocyanate group-terminated prepolymer contains a reaction product of a polyisocyanate component and an active hydrogen group-containing component, the polyisocyanate component contains xylylene diisocyanate and/or hydrogenated xylylene diisocyanate, the active hydrogen group-containing component contains a short-chain diol having 2 to 6 carbon atoms and an active hydrogen compound containing an anionic group.

The present invention [7] includes the laminate described in any one of the above-described [4] to [6], wherein the gas barrier layer further contains a layered inorganic compound.

The present invention [8] includes the laminate described in any one of the above-described [1] to [7] further including a heat seal layer disposed on at least one side of the gas barrier layer.

The present invention [9] includes a packaging material including the laminate described in any one of the above-described [1] to [8].

### EFFECT OF THE INVENTION

The laminate of the present invention includes the paper substrate, the filling layer, and the gas barrier layer. Then, in the above-described laminate, the filling layer contains the polyolefin resin and the (meth)acrylic resin. Therefore, the filling layer has excellent blocking resistance. That is, the above-described laminate has excellent handleability. Furthermore, since the above-described filling layer contains the polyolefin resin and the (meth)acrylic resin, it has excellent bending resistance. As a result, the laminate has both the excellent handleability and the excellent bending resistance.

Since the packaging material of the present invention includes the above-described laminate, it has both the excellent handleability and the excellent bending resistance.

### BRIEF DESCRIPTION OF THE DRAWINGS

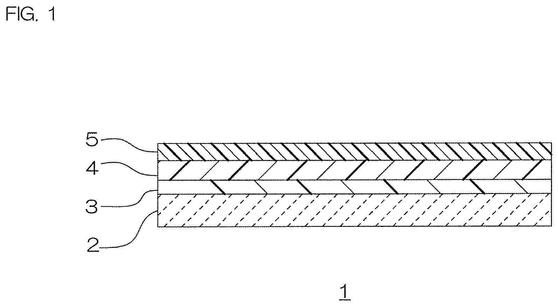

FIG. 1 shows a schematic view for illustrating one embodiment of a laminate of the present invention.

### DESCRIPTION OF EMBODIMENTS

### 1. Laminate

In FIG. 1, a laminate 1 includes a paper substrate 2, a filling layer 3 which is disposed on at least one side (upper side on the plane of the sheet) in a thickness direction of the paper substrate 2, and a gas barrier layer 4 which is disposed on at least one side (upper side on the plane of the sheet) in the thickness direction of the filling layer 3.

Further, the above-described laminate 1 may also furthermore include, as an optional layer, a heat seal layer 5 which is disposed on at least one side (upper side on the plane of the sheet) in the thickness direction of the gas barrier layer 4. In FIG. 1, the laminate 1 includes the heat seal layer 5. In other words, in FIG. 1, the laminate 1 includes the paper substrate 2, the filling layer 3, the gas barrier layer 4, and the heat seal layer 5 in order from the other side in the thickness direction (lower side on the plane of the sheet) toward one side (upper side on the plane of the sheet).

### (1) Paper Substrate

The paper substrate 2 is a substrate formed of paper. An example of the paper substrate 2 includes paper obtained by making pulp. Examples of the pulp include natural pulp and synthetic pulp. More specifically, examples of the paper substrate 2 include glassine paper, coated paper, single glazed kraft paper, roll paper, and cup base paper. The paper substrate 2 may be a single layer of paper or a multilayer of paper. The paper substrate 2 is appropriately selected in accordance with its application of the laminate 1.

A shape of the paper substrate 2 is not particularly limited, and is appropriately set. Examples of the shape of the paper substrate 2 include sheet-like shapes, bottle-like shapes, and cup-like shapes. As the shape of the paper substrate 2, preferably, a sheet-like shape is used.

The paper substrate 2 may be also subjected to a surface treatment, if necessary. Examples of the surface treatment include corona discharge treatments, surface coating treatments, and vapor deposition treatments.

A thickness of the paper substrate 2 is, for example, 3 µm or more, preferably 5 µm or more. Further, the thickness of the paper substrate 2 is, for example, 500 µm or less, preferably 200 µm or less.

In addition, a basis weight of the paper substrate 2 is, for example, 20 g/m² or more, preferably 30 g/m² or more. Further, the basis weight of the paper substrate 2 is, for example, 400 g/m² or less, preferably 300 g/m² or less.

### (2) Filling Layer

The filling layer 3 is laminated on the paper substrate 2 so as to suppress impregnation of a gas barrier coating material (described later) with respect to the paper substrate 2. Further, the filling layer 3 is laminated on the paper substrate 2 so as to absorb unevenness on the surface of the paper substrate 2 and smooth the surface. More specifically, the filling layer 3 is disposed on at least a one side-surface of the paper substrate 2. The filling layer 3 may be also disposed on both surfaces of the paper substrate 2. The filling layer 3 is preferably disposed on only the one-side surface of the paper substrate 2.

The filling layer 3 contains a filling resin. More specifically, the filling layer 3 is, for example, formed by coating a coating material containing the filing resin (hereinafter, a filling coating material) onto the surface of the paper substrate 2 to be dried.

More specifically, examples of the filling coating material include a solution obtained by dissolving the filling resin in a solvent (described later) and a dispersion liquid obtained by dispersing the filling resin in the solvent (described later).

Examples of the filling resin include polyolefin resins and (meth)acrylic resins. More specifically, the filling resin (the filling layer 3) contains a polyolefin resin and a (meth)acrylic resin as an essential component. In other words, as the filling resin, the polyolefin resin and the (meth)acrylic resin are used in combination.

### [Polyolefin Resin (PO)]

The polyolefin resin is a resin containing a constitutional unit derived from an olefin. The polyolefin resin is obtained by polymerization of a monomer component (hereinafter, an olefin raw material monomer component) as a raw material composition.

The olefin raw material monomer component contains the olefin. An example of the olefin includes an α-olefin. An example of the α-olefin includes an α-olefin having 1 to 20 carbon atoms. Examples of the α-olefin having 1 to 20 carbon atoms include ethylene, propylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. These may be used alone or in combination of two or more. As the α-olefin, preferably, an olefin having 2 to 3 carbon atoms is used, more preferably, ethylene and/or propylene are/is used, further more preferably, ethylene is used.

The olefin raw material monomer component may also contain only the olefin. Further, the olefin raw material monomer component may also contain the olefin and a copolymerizable monomer. Preferably, the olefin raw material monomer component contains the olefin and the copolymerizable monomer.

In the olefin raw material monomer component, the copolymerizable monomer is a monomer copolymerizable with the olefin. Examples of the copolymerizable monomer include unsaturated carboxylic acids, unsaturated carboxylic acid esters, hydroxyl group-containing vinyl monomers, amino group-containing vinyl monomers, glycidyl group-containing vinyl monomers, cyano group-containing vinyl monomers, sulfonic acid group-containing vinyl monomers, acetoacetoxy group-containing vinyl monomers, phosphate group-containing vinyl monomers, amide group-containing vinyl monomers, aromatic vinyl monomers, N-substituted unsaturated carboxylic acid amides, heterocyclic vinyl compounds, halogenated vinylidene compounds, dienes, and vinyl esters. These may be used alone or in combination of two or more.

As the copolymerizable monomer, preferably, an unsaturated carboxylic acid is used. When the olefin raw material monomer component contains the unsaturated carboxylic acid, it is possible to obtain excellent water dispersibility.

Examples of the unsaturated carboxylic acid include unsaturated monocarboxylic acids and unsaturated dicarboxylic acids. Examples of the unsaturated monocarboxylic acid include (meth)acrylic acids, crotonic acids, and isocrotonic acids. Examples of the unsaturated dicarboxylic acid include maleic acids, fumaric acids, tetrahydrophthalic acids, itaconic acids, citraconic acids, and norbornene dicarboxylic acids and acid anhydrides of these. These unsaturated carboxylic acids may be used alone or in combination of two or more. As the unsaturated carboxylic acid, preferably, an unsaturated monocarboxylic acid and an acid anhydride of the unsaturated dicarboxylic acid are used, more preferably, a (meth)acrylic acid is used.

The (meth)acryl shows acryl and/or methacryl. Further, the same applies to a (meth)acrylate. As the (meth)acrylic acid, preferably, a methacrylic acid is used.

When the olefin raw material monomer component contains the olefin and the unsaturated carboxylic acid, as the polyolefin resin, an unsaturated carboxylic acid-modified polyolefin resin is obtained. As the unsaturated carboxylic acid-modified polyolefin resin, more specifically, for example, an ethylene-methacrylic acid copolymer (EMAA) is used.

In the olefin raw material monomer component, a content ratio of the olefin and the copolymerizable monomer is appropriately set in accordance with a kind of the copolymerizable monomer. For example, a ratio of the olefin and the unsaturated carboxylic acid as the copolymerizable monomer is, for example, appropriately adjusted so as to balance handleability (blocking resistance) and bending resistance of the filling layer 3, and hydrophilicity of the polyolefin resin.

More specifically, the content ratio of the olefin is, for example, 50% by mass or more, preferably 60% by mass or more, more preferably 70% by mass or more with respect to the total amount of the olefin raw material monomer component. Further, the content ratio of the olefin is, for example, 99% by mass or less, preferably 97% by mass or less, more preferably 95% by mass or less, further more preferably 93% by mass or less, particularly preferably 90% by mass or less with respect to the total amount of the olefin raw material monomer component.

The content ratio of the olefin in the olefin raw material monomer component is substantially the same as the content ratio of the constitutional unit derived from the olefin in the unsaturated carboxylic acid-modified polyolefin resin.

In other words, the content ratio of the constitutional unit derived from the olefin is, for example, 50% by mass or more, preferably 60% by mass or more, more preferably 70% by mass or more with respect to the total amount of the unsaturated carboxylic acid-modified polyolefin resin. In addition, the content ratio of the constitutional unit derived from the olefin is, for example, 99% by mass or less, preferably 97% by mass or less, more preferably 95% by mass or less, further more preferably 93% by mass or less, particularly preferably 90% by mass or less with respect to the total amount of the unsaturated carboxylic acid-modified polyolefin resin.

In the polyolefin resin, as described above, the content ratio of the constitutional unit derived from the olefin is 50% by mass or more, preferably 60% by mass or more with respect to the total amount of the polyolefin resin. The polyolefin resin is distinguished from another resin containing the constitutional unit derived from the olefin by the content ratio of the constitutional unit derived from the olefin.

More specifically, in the resin other than the polyolefin resin containing the constitutional unit derived from the olefin (for example, the (meth)acrylic resin to be described later), the content ratio of the constitutional unit derived from the olefin is below 50% by mass, preferably 40% by mass or less.

In addition, the content ratio of the unsaturated carboxylic acid is, from the viewpoint of the hydrophilicity, for example, 1% by mass or more, preferably 5% by mass or more, more preferably 8% by mass or more, further more preferably 10% by mass or more with respect to the total amount of the olefin raw material monomer component. In addition, the content ratio of the unsaturated carboxylic acid is, from the viewpoint of the handleability (blocking resistance) and the bending resistance, for example, below 50% by mass, preferably 40% by mass or less, more preferably 30% by mass or less, further more preferably 25% by mass or less with respect to the total amount of the olefin raw material monomer component.

The content ratio of the unsaturated carboxylic acid in the olefin raw material monomer component is substantially the same as the content ratio of the constitutional unit derived from the unsaturated carboxylic acid in the unsaturated carboxylic acid modified polyolefin resin.

In other words, the content ratio of the constitutional unit derived from the unsaturated carboxylic acid is, for example, 1% by mass or more, preferably 5% by mass or more, more preferably 8% by mass or more, further more preferably 10% by mass or more with respect to the total amount of the unsaturated carboxylic acid-modified polyolefin resin. In addition, the content ratio of the constitutional unit derived from the unsaturated carboxylic acid is, for example, below 50% by mass, preferably 40% by mass or less, more preferably 30% by mass or less, further more preferably 25% by mass or less with respect to the total amount of the unsaturated carboxylic acid-modified polyolefin resin.

A method for producing the polyolefin resin is not particularly limited, and a known method is used. For example, the above-described olefin raw material monomer component and a known polymerization initiator (peroxide or the like) are brought into contact with each other under conditions of high temperature and high pressure. Thus, the polyolefin resin is obtained as a polymerization product of the olefin raw material monomer component.

### [(Meth)Acrylic Resin (Ac)]

The (meth)acrylic resin is the resin containing the constitutional unit derived from a (meth)acrylate. The (meth)acrylic resin is obtained by polymerization of a monomer component (hereinafter, an acrylic raw material monomer component) as a raw material composition.

The acrylic raw material monomer component contains the (meth)acrylate. An example of the (meth)acrylate includes a (meth)acrylate having an alkyl moiety having 1 to 12 carbon atoms. More specifically, examples of the (meth)acrylate include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, 2-ethylhexyl (meth)acrylate, and lauryl (meth)acrylate. These may be used alone or in combination of two or more. As the (meth)acrylate, preferably, a (meth)acrylate having an alkyl moiety having 2 to 10 carbon atoms is used, more preferably, a (meth)acrylate having an alkyl moiety having 4 to 8 carbon atoms is used, further more preferably, a butyl (meth)acrylate and a 2-ethylhexyl (meth)acrylate are used, particularly preferably, a 2-ethylhexyl (meth)acrylate (also known as a 2-ethylhexyl (meth)acrylate) is used.

The acrylic raw material monomer component may also contain only the (meth)acrylate. Further, the acrylic raw material monomer component may also contain the (meth)acrylate and the copolymerizable monomer. Preferably, the acrylic raw material monomer component contains the (meth)acrylate and the copolymerizable monomer.

In the acrylic raw material monomer component, the copolymerizable monomer is a monomer copolymerizable with the (meth)acrylate. Examples of the copolymerizable monomer include olefins, unsaturated carboxylic acids, hydroxyl group-containing vinyl monomers, amino group-containing vinyl monomers, glycidyl group-containing vinyl monomers, cyano group-containing vinyl monomers, sulfonic acid group-containing vinyl monomers, acetoacetoxy group-containing vinyl monomers, phosphate group-containing vinyl monomers, amide group-containing vinyl monomers, aromatic vinyl monomers, N-substituted unsaturated carboxylic amides, heterocyclic vinyl compounds, vinylidene halide compounds, dienes, and vinyl esters. These may be used alone or in combination of two or more.

As the copolymerizable monomer, preferably, an aromatic vinyl monomer is used. When the acrylic raw material monomer component contains the aromatic vinyl monomer, the blocking resistance of the filling layer 3 is further improved.

Examples of the aromatic vinyl monomer include styrene, α-methylstyrene, t-butylstyrene, halide styrene, vinyltoluene, and vinylxylene. These may be used alone or in combination of two or more. As the aromatic vinyl monomer, preferably, styrene is used.

When the acrylic raw material monomer contains the (meth)acrylate and the aromatic vinyl monomer, as the (meth)acrylic resin, an aromatic ring-containing (meth)acrylic resin is obtained. More specifically, as the aromatic ring-containing (meth)acrylic resin, for example, a styrene-(meth)acrylate copolymer is used.

In the acrylic raw material monomer component, the content ratio of the (meth)acrylate and the copolymerizable monomer is appropriately set in accordance with the kind of the copolymerizable monomer. For example, the ratio of the (meth)acrylate and the aromatic vinyl monomer as the copolymerizable monomer is, for example, appropriately adjusted so as to balance the handleability (blocking resistance) and the bending resistance of the filling layer 3, and a glass transition temperature (described later) of the (meth)acrylic resin.

More specifically, the content ratio of the (meth)acrylate is, for example, 10% by mass or more, preferably 20% by mass or more, more preferably 30% by mass or more, further more preferably 40% by mass or more, even more preferably 50% by mass or more, particularly preferably 60% by mass or more with respect to the total amount of the acrylic raw material monomer component. In addition, the content ratio of the (meth)acrylate is, for example, 99% by mass or less, preferably 90% by mass or less, more preferably 80% by mass or less, further more preferably 85% by mass or less, particularly preferably 70% by mass or less with respect to the total amount of the acrylic raw material monomer component.

The content ratio of the (meth)acrylate in the acrylic raw material monomer component is substantially the same as the content ratio of the constitutional unit derived from the (meth)acrylate in the (meth)acrylic resin.

In other words, the content ratio of the constitutional unit derived from the (meth)acrylate is, for example, 10% by mass or more, preferably 20% by mass or more, more preferably 30% by mass or more, further more preferably 40% by mass or more, even more preferably 50% by mass or more, particularly preferably 60% by mass or more with respect to the total amount of the (meth)acrylic resin. In addition, the content ratio of the constitutional unit derived from the (meth)acrylate is, for example, 99% by mass or less, preferably 90% by mass or less, more preferably 80% by mass or less, further more preferably 85% by mass or less, particularly preferably 70% by mass or less with respect to the total amount of the (meth)acrylic resin.

In addition, the content ratio of the aromatic vinyl monomer is, from the viewpoint of the handleability (blocking resistance) and the glass transition temperature, for example, 1% by mass or more, preferably 10% by mass or more, more preferably 20% by mass or more, further more preferably 25% by mass or more, particularly preferably 30% by mass or more with respect to the total amount of the acrylic raw material monomer component. In addition, the content ratio of the aromatic vinyl monomer is, from the viewpoint of the bending resistance and the glass transition temperature, for example, 90% by mass or less, preferably 80% by mass or less, more preferably 70% by mass or less, further more preferably 60% by mass or less, even more preferably 50% by mass or less, particularly preferably 40% by mass or less with respect to the total amount of the acrylic raw material monomer component.

The content ratio of the aromatic vinyl monomer in the acrylic raw material monomer component is substantially the same as the content ratio of the constitutional unit derived from the aromatic vinyl monomer in the (meth)acrylic resin.

In other words, the content ratio of the constitutional unit derived from the aromatic vinyl monomer is, for example, 1% by mass or more, preferably 10% by mass or more, more preferably 20% by mass or more, further more preferably 25% by mass or more, particularly preferably 30% by mass or more with respect to the total amount of the (meth)acrylic resin. In addition, the content ratio of the constitutional unit derived from the aromatic vinyl monomer is, for example, 90% by mass or less, preferably 80% by mass or less, more preferably 70% by mass or less, further more preferably 60% by mass or less, even more preferably 50% by mass or less, particularly preferably 40% by mass or less with respect to the total amount of the (meth)acrylic resin.

When the acrylic raw material monomer component contains the olefin as the copolymerizable monomer, in the (meth)acrylic resin, the content ratio of the constitutional unit derived from the olefin is below 50% by mass, preferably 40% by mass or less with respect to the total amount of the (meth)acrylic resin. The (meth)acrylic resin is distinguished from the above-described polyolefin resin by the content ratio of the constitutional unit derived from the olefin.

In addition, in the acrylic raw material monomer component, the kind and the ratio of the (meth)acrylate and the copolymerizable monomer are set in order to adjust the glass transition temperature of the (meth)acrylic resin.

The glass transition temperature of the (meth)acrylic resin is, for example, -90°C or more, preferably -60°C or more, more preferably -50°C or more, further more preferably -40°C or more, particularly preferably -30°C or more. Further, the glass transition temperature of the (meth)acrylic resin is, for example, 70°C or less, preferably 50°C or less, more preferably 30°C or less, further more preferably 10°C or less, even more preferably 0°C or less, particularly preferably -10°C or less. When the glass transition temperature of the (meth)acrylic resin is within the above-described range, it is possible to obtain the particularly excellent blocking resistance.

The glass transition temperature of the (meth)acrylic resin is calculated based on a formula of Fox. The formula of Fox is a known formula showing a relationship between the glass transition temperature of a polymer and a glass transition temperature Tg of a homopolymer of a monomer constituting the polymer.

A method for producing the (meth)acrylic resin is not particularly limited, and a known method is used. For example, the above-described acrylic raw material monomer component and the known polymerization initiator (peroxide or the like) are brought into contact with each other under the conditions of high temperature and high pressure. Thus, an anionic group-containing (meth)acrylic resin is obtained as the polymerization product of the acrylic raw material monomer component.

### [Filling Resin]

The filling resin may contain another resin as an optional component. Examples of another resin include resins excluding the polyolefin resins and the (meth)acrylic resins. Examples of another resin include polyester resins, polyamide resins, polyvinyl resins, polycarbonate resins, and cellulose resins. These may be used alone or in combination of two or more.

The filling resin preferably contains no another resin and consists of the polyolefin resin and the (meth)acrylic resin.

In the filling resin, the ratio of the polyolefin resin and the (meth)acrylic resin is adjusted from the viewpoint of balancing the handleability (blocking resistance) and the bending resistance of the filling layer 3.

More specifically, the content ratio of the polyolefin resin is, for example, 6% by mass or more, preferably 20% by mass or more, more preferably 40% by mass or more, further more preferably 50% by mass or more, even more preferably above 50% by mass, still more preferably 60% by mass or more, still more preferably 70% by mass or more, particularly preferably 75% by mass or more with respect to the total amount of the polyolefin resin and the (meth)acrylic resin. In addition, the content ratio of the polyolefin resin is, for example, 94% by mass or less, preferably 92% by mass or less, more preferably 90% by mass or less, further more preferably 88% by mass or less, particularly preferably 85% by mass or less with respect to the total amount of the polyolefin resin and the (meth)acrylic resin.

In addition, the content ratio of the (meth)acrylic resin is, for example, 6% by mass or more, preferably 8% by mass or more, more preferably 10% by mass or more, further more preferably 12% by mass or more, particularly preferably 15% by mass or more with respect to the total amount of the polyolefin resin and the (meth)acrylic resin. Further, the content ratio of the (meth)acrylic resin is, for example, 94% by mass or less, preferably 80% by mass or less, more preferably 60% by mass or less, further more preferably 50% by mass or less, even more preferably below 50% by mass, still more preferably 40% by mass or less, still more preferably 30% by mass or less, particularly preferably 25% by mass or less with respect to the total amount of the polyolefin resin and the (meth)acrylic resin.

When the ratio of the polyolefin resin and the (meth)acrylic resin is within the above-described range, the filling layer 3 has particularly excellently both the handleability (blocking resistance) and the bending resistance.

### [Method for Producing Filling Resin]

A form of the filling resin is not particularly limited as long as it contains the polyolefin resin and the (meth)acrylic resin. For example, the filling resin may be also a resin composition containing the polyolefin resin and the (meth)acrylic resin (mixed resin). Further, the filling resin may be also a composite resin containing the polyolefin resin and the (meth)acrylic resin (polyolefin-(meth)acrylic composite resin).

When the filling resin is the resin composition containing the polyolefin resin and the (meth)acrylic resin (mixed resin), for example, the polyolefin resin and the (meth)acrylic resin are individually prepared.

More specifically, the polyolefin resin is prepared in a state of being dissolved and/or dispersed in the solvent. For example, the olefin raw material monomer component is polymerized in the solvent, so that the polyolefin resin is synthesized in the solvent. Thus, a dispersion liquid of the polyolefin resin (polyolefin dispersion) is obtained.

The solvent is not particularly limited, and examples thereof include water, methanol, ethanol, propanol, isopropanol, acetone, methyl ethyl ketone, ethyl acetate, tetrahydrofuran and acetonitrile. These solvents may be used alone or in combination of two or more. The solid content concentration of the filling coating material is not particularly limited and is appropriately set in accordance with its purpose and application.

In addition, the (meth)acrylic resin is prepared in a state of being dissolved and/or dispersed in the solvent. For example, the acrylic raw material monomer component is polymerized in the above-described solvent, so that the (meth)acrylic resin is synthesized in the solvent. Thus, the dispersion liquid (acrylic emulsion) of the (meth)acrylic resin is obtained.

Then, in this method, for example, the dispersion liquid of the polyolefin resin (polyolefin dispersion) and the dispersion liquid of the (meth)acrylic resin (acrylic emulsion) are mixed. A mixing ratio is, for example, adjusted so that a mass ratio of the polyolefin resin and the (meth)acrylic resin is within the above-described range.

Thus, the resin composition containing the polyolefin resin and the (meth)acrylic resin (mixed resin) is obtained in the solvent. In other words, the solution and/or the dispersion liquid of the filling resin (mixed resin) are/is obtained.

In addition, when the filling resin is a composite containing the polyolefin resin and the (meth)acrylic resin (composite resin), examples of the composite (composite resin) include core-shell particles.

The core-shell particles are produced by a known method. More specifically, a method for producing the core-shell particles is not particularly limited, and for example, the acrylic raw material monomer component is polymerized in the dispersion liquid (polyolefin dispersion) containing the above-described polyolefin resin. The polymerization method is appropriately set in accordance with the kind and the amount of the acrylic raw material monomer component.

Thus, in the above-described solvent, the (meth)acrylic resin is synthesized so as to cover the polyolefin resin. Further, if necessary, after completion of the reaction, the (meth)acrylic resin is neutralized with a known neutralizing agent.

As a result, the core-shell particles including a core containing the polyolefin resin and a shell covering the core and containing the (meth)acrylic resin is obtained as the composite resin. That is, in other words, the solution and/or the dispersion liquid of the filling resin (composite resin) are/is obtained. Preferably, an emulsion of the polyolefin-(meth)acrylic composite resin is obtained.

Further, the composite resin is not limited to the above-described core-shell particles. Examples of the composite resin include core-shell particles including the core containing the (meth)acrylic resin and the shell covering the core and containing the polyolefin resin.

Further, it is also possible to use the above-described resin composition containing the polyolefin resin and the (meth)acrylic resin (mixed resin) and the composite resin containing the polyolefin resin and the (meth)acrylic resin (polyolefin-(meth)acrylic composite resin) in combination as the filling resin.

From the viewpoint of storage stability, preferably, the filling resin is the composite resin containing the polyolefin resin and the (meth)acrylic resin (polyolefin-(meth)acrylic composite resin).

On the other hand, from the viewpoint of coating drying properties, preferably, the filling resin is the resin composition containing the polyolefin resin and the (meth)acrylic resin (mixed resin). In other words, it is possible to set the solid content concentration of the (meth)acrylic resin relatively high depending on the production method. Therefore, it is possible to set the solid content concentration of the resin composition containing the polyolefin resin and the (meth)acrylic resin (mixed resin) relatively high. Then, the resin composition (mixed resin) having the relatively high solid content concentration has the excellent coating drying properties.

The solid content concentration of the solution and/or the dispersion liquid of the filling resin is, for example, 10% by mass or more, preferably 15% by mass or more, more preferably 20% by mass or more. In addition, the solid content concentration of the solution and/or the dispersion liquid of the filling resin is, for example, 60% by mass or less, preferably 50% by mass or less, more preferably 40% by mass or less.

### [Filling Coating Material]

The filling coating material contains the solution and/or the dispersion liquid of the filling resin described above. In other words, the filling coating material contains the above-described filling resin and the above-described solvent. Further, if necessary, the filling coating material may contain an additive. In other words, the filling coating material may contain the above-described filling resin, the additive, and the above-described solvent.

Examples of the additive include heat-resistant stabilizers, antioxidants, light-resistant stabilizers, ultraviolet absorbers, plasticizers, antistatic agents, lubricants, anti-blocking agents, pigments, dyes, crystal nucleating agents, and curing agents. These may be used alone or in combination of two or more. An addition amount and timing of the addition of the additive are appropriately set in accordance with its purpose and application.

The solid content concentration of the filling coating material is, for example, 10% by mass or more, preferably 15% by mass or more, more preferably 20% by mass or more. In addition, the solid content concentration of the filling coating material is, for example, 60% by mass or less, preferably 50% by mass or less, more preferably 40% by mass or less.

A method for coating the filling coating material is not particularly limited. Examples of the coating method include dip coating methods, gravure coating methods, reverse coating methods, roll coating methods, bar coating methods, spray coating methods, and air knife coating methods. Drying conditions of the filling coating material are not particularly limited. For example, a drying temperature is, for example, 40°C or more, preferably 50°C or more. Further, the drying temperature is, for example, 200°C or less, preferably 180°C or less. Further, drying time is, for example, one second or more, preferably 30 seconds or more. Further, the drying time is, for example, 10 minutes or less, preferably five minutes or less.

Thus, the filling layer 3 is formed. The amount (dry mass) of the filling layer 3 is, for example, 1 g/m² or more, preferably 3 g/m² or more. Further, the amount (dry mass) of the filling layer 3 is, for example, 30 g/m² or less, preferably 15 g/m² or less.

### (3) Gas Barrier Layer

The gas barrier layer 4 is a layer having gas barrier properties. The gas barrier properties are properties of lowering transmittance of oxygen. More specifically, the gas barrier layer 4 consists of a gas barrier resin having an oxygen permeability of a predetermined value or less. For example, the oxygen permeability of the gas barrier layer 4 having a thickness of 10 µm is, for example, 1 (cc/m²·day·atm) or less at room temperature. The oxygen permeability is measured using an oxygen permeability analyzer (manufactured by AMTEK MOCON, OX-TRAN 2/22H) in conformity with JIS K7126 (2006) B method. Measurement conditions are 20°C and 80%RH (relative humidity).

The gas barrier layer 4 is disposed on the surface of the filling layer 3. In other words, the gas barrier layer 4 is disposed on the surface of the filling layer 3 on the side where the filling layer 3 is disposed with respect to the paper substrate 2. The gas barrier layer 4 may be also disposed on both surfaces of the paper substrate 2 along with the filling layer 3. The gas barrier layer 4 is preferably disposed on only the one-side surface of the paper substrate 2 along with the filling layer 3.

Examples of the gas barrier layer 4 include inorganic layers and resin layers. The inorganic layer contains, for example, a metal and/or a metal oxide. An example of the metal includes aluminum. Examples of the metal oxide include aluminum oxide and silicon oxide. More specifically, examples of the inorganic layer include metal thin film layers and metal vapor deposition layers. The resin layer contains, for example, the gas barrier resin. More specifically, examples of the resin layer include barrier coat layers and barrier film layers.

The gas barrier layer 4 is preferably the barrier coat layer containing the gas barrier resin. More specifically, the gas barrier layer 4 is, for example, formed by coating a coating material containing the gas barrier resin (hereinafter, a gas barrier coating material) onto the filling layer 3 to be dried.

The gas barrier resin is a resin having the oxygen permeability of the predetermined value or less. More specifically, the oxygen permeability of the film having the thickness of 10 µm and consisting of the gas barrier resin is, for example, 1 (cc/m²·day·atm) or less at room temperature. The oxygen permeability is measured using the oxygen permeability analyzer (manufactured by AMTEK MOCON, OX-TRAN 2/22H) in conformity with JIS K7126 (2006) B method. The measurement conditions are 20°C and 80%RH (relative humidity).

The gas barrier resin is not particularly limited. Examples of the gas barrier resin include gas barrier polyurethane resins and gas barrier acrylic resins. These may be used alone or in combination of two or more. From the viewpoint of the gas barrier properties, as the gas barrier resin, preferably, a gas barrier polyurethane resin is used. In other words, the gas barrier resin preferably contains a gas barrier polyurethane resin, and more preferably consists of a gas barrier polyurethane resin.

The gas barrier polyurethane resin is a resin having the oxygen permeability of the above-described predetermined value or less. The gas barrier polyurethane resin is not particularly limited, and a known gas barrier polyurethane resin is used. For example, the gas barrier polyurethane resin is contained in a polyurethane dispersion (PUD) as the gas barrier coating material.

The gas barrier polyurethane resin and the polyurethane dispersion are, for example, produced in conformity with the descriptions of paragraphs [0026] to [0111] of Japanese Unexamined Patent Publication No. 2015-044396 and paragraphs [0048] to [0141] of Japanese Unexamined Patent Publication No. 2021-115802.

More specifically, the gas barrier polyurethane resin contains, for example, a reaction product of an isocyanate group-terminated prepolymer and a chain extender, and preferably consists of a reaction product of an isocyanate group-terminated prepolymer and a chain extender. The isocyanate group-terminated prepolymer contains, for example, a reaction product of a polyisocyanate component and an active hydrogen group-containing component, and preferably consists of a reaction product of a polyisocyanate component and an active hydrogen group-containing component.

That is, a primary reaction product of the polyisocyanate component and the active hydrogen group-containing component is the isocyanate group-terminated prepolymer. Then, a secondary reaction product of the isocyanate group-terminated prepolymer and the chain extender is the gas barrier polyurethane resin.

Examples of the polyisocyanate component include known polyisocyanate components. From the viewpoint of the gas barrier properties, the polyisocyanate component preferably contains xylylene diisocyanate and/or hydrogenated xylylene diisocyanate. Further, the polyisocyanate component may contain another polyisocyanate (polyisocyanate excluding the xylylene diisocyanate and the hydrogenated xylylene diisocyanate) if necessary. Examples of another polyisocyanate include industrially widely available polyisocyanates. More specifically, examples of another polyisocyanate include pentamethylene diisocyanate (PDI), hexamethylene diisocyanate (HDI), isophorone diisocyanate (IPDI), norbornene diisocyanate (NBDI), methylenebis(cyclohexyl isocyanate) (H₁₂MDI), diphenylmethane diisocyanate (MDI), tolylene diisocyanate (TDI), toluidine diisocyanate (TODI), naphthalene diisocyanate (NDI), and tetramethylxylylene diisocyanate (TMXDI). These may be used alone or in combination of two or more. As another polyisocyanate, preferably, methylenebis(cyclohexyl isocyanate) (H₁₂MDI) is used. Further, the polyisocyanate component may be a monomer or a derivative. Examples of the derivative include multimers, isocyanurate modified products, allophanate modified products, polyol adducts, biuret modified products, urea modified products, oxadiazinetrione modified products, and carbodiimide modified products. These may be used alone or in combination of two or more.

The polyisocyanate component preferably contains the xylylene diisocyanate and/or the hydrogenated xylylene diisocyanate, and another polyisocyanate (preferably methylenebis(cyclohexyl isocyanate)). The content ratio of these may be appropriately set in accordance with its purpose and application.

The active hydrogen group-containing component is an organic compound containing an active hydrogen group. Examples of the active hydrogen group include hydroxyl groups and amino groups, and preferably, a hydroxyl group is used. Examples of the active hydrogen group-containing component include known active hydrogen group-containing compounds. From the viewpoint of the gas barrier properties, the active hydrogen group-containing component preferably contains a short-chain diol having 2 to 6 carbon atoms and an active hydrogen group-containing compound containing an anionic group.

The short-chain diol having 2 to 6 carbon atoms is an organic compound having 2 to 6 carbon atoms having two hydroxyl groups in one molecule. Examples of the short-chain diol include an alkanediol having 2 to 6 carbon atoms and an ether diol having 2 to 6 carbon atoms, and preferably, an alkanediol having 2 to 6 carbon atoms is used. Examples of the alkanediol having 2 to 6 carbon atoms include ethylene glycol, propylene glycol, 1,3-propanediol, 1,4-butylene glycol, 1,3-butylene glycol, 1,2-butylene glycol, 1,5-pentanediol, 1,6-hexanediol, and neopentyl glycol. These may be used alone or in combination of two or more. From the viewpoint of the gas barrier properties, preferably, ethylene glycol is used.

As the active hydrogen group-containing compound containing an anionic group, preferably, an organic compound having one carboxy group and two or more hydroxyl groups in one molecule in combination is used, more preferably, an organic compound having one carboxy group and two hydroxyl groups in one molecule in combination is used. An example of the organic compound having one carboxy group and two hydroxyl groups in one molecule in combination includes a carboxy group-containing diol. An example of the carboxy group-containing diol includes dihydroxyalkanoic acid. Examples of the dihydroxyalkanoic acid include 2,2-dimethylolacetic acid, 2,2-dimethylollactic acid, 2,2-dimethylolpropionic acid (also known as dimethylolpropionic acid), 2,2-dimethylolbutanoic acid, 2,2-dimethylolbutyric acid, and 2,2-dimethylolvaleric acid. These may be used alone or in combination of two or more. From the viewpoint of the water dispersibility, preferably, 2,2-dimethylolpropionic acid is used.

In the active hydrogen group-containing component, the content ratio of the short-chain diol having 2 to 6 carbon atoms and the content ratio of the active hydrogen group-containing compound containing an anionic group are appropriately set in accordance with its purpose and application.

The active hydrogen group-containing component may also further contain another polyol. Examples of another polyol include a trihydric or more low molecular weight polyol, a short-chain diol having seven or more carbon atoms, and a high molecular weight polyol. These may be used alone or in combination of two or more. As another polyol, preferably, a trihydric or more low molecular weight polyol is used, preferably, a trihydric alcohol and a tetrahydric alcohol are used. Examples of the trihydric alcohol include glycerin, 2-methyl-2-hydroxymethyl-1,3-propanediol, 2,4-dihydroxy-3-hydroxymethylpentane, 1,2,6-hexanetriol, trimethylolpropane, and 2,2-bis(hydroxymethyl)-3-butanol. Examples of the tetrahydric alcohol include tetramethylolmethane(pentaerythritol) and diglycerin. These may be used alone or in combination of two or more. As the trihydric or more low molecular weight polyol, more preferably, a trihydric alcohol is used, further more preferably, trimethylolpropane is used. Further, an example of another polyol includes an active hydrogen group-containing compound containing a nonionic group. The active hydrogen group-containing compound containing a nonionic group is used, for example, along with the above-described active hydrogen compound containing an anionic group. In addition, the active hydrogen group-containing compound containing a nonionic group may be also used, for example, instead of the above-described active hydrogen compound containing an anionic group. In the active hydrogen group-containing component, the content ratio of another polyol is appropriately set in accordance with its purpose and application.

A method for synthesizing the isocyanate group-terminated prepolymer is not particularly limited. For example, each of the components described above is blended at a predetermined equivalent ratio to be reacted. Examples of the reaction method include bulk polymerization and solution polymerization, and preferably, solution polymerization is used. In the above-described reaction, if necessary, a urethanization catalyst may be added at an appropriate ratio.

In addition, when the above-described isocyanate group-terminated prepolymer has the anionic group derived from the active hydrogen compound containing an anionic group, the isocyanate group-terminated prepolymer is neutralized by a known neutralizing agent (for example, triethylamine), thereby forming a salt of the anionic group.

The isocyanate group concentration of the isocyanate group-terminated prepolymer is, for example, 4% by mass or more, preferably 5% by mass or more, more preferably 6% by mass or more. Further, the isocyanate group concentration of the isocyanate group-terminated prepolymer is, for example, 25% by mass or less, preferably 20% by mass or less, more preferably 17% by mass or less, further more preferably 15% by mass or less.

Next, in this method, the isocyanate group-terminated prepolymer (primary reaction product) and the chain extender are reacted, thereby obtaining the gas barrier polyurethane resin (secondary reaction product). For example, by reacting the isocyanate group-terminated prepolymer with the chain extender in the water, the gas barrier polyurethane resin is generated and water-dispersed.

The chain extender is an organic compound which subjects the isocyanate group-terminated prepolymer to a chain extension reaction. The chain extender has a plurality of active hydrogen groups. Examples of the chain extender include polyamine, amino group-containing alkoxysilyl compounds, and amino alcohols (for example, 2-((2-aminoethyl)amino)ethanol).

A method for reacting the isocyanate group-terminated prepolymer with the chain extender in the water is not particularly limited. For example, first, the isocyanate group-terminated prepolymer is water-dispersed. Next, the chain extender is added to the water in which the isocyanate group-terminated prepolymer is dispersed, and the isocyanate group-terminated prepolymer is chain-extended in the water. In addition, in this method, the water can be also added after the completion of the reaction so as to adjust the solid content concentration.

By the above-described chain extension reaction, an aqueous dispersion of the gas barrier polyurethane resin (hereinafter, a primary polyurethane dispersion, a primary PUD) is obtained. The primary polyurethane dispersion (primary PUD) is an aqueous dispersion containing no additive to be described later and containing the gas barrier polyurethane resin.

The gas barrier resin is not limited to the above-described gas barrier polyurethane resin, and the gas barrier resin is preferably prepared as the aqueous dispersion of the gas barrier resin (primary aqueous dispersion).

The solid content concentration of the aqueous dispersion of the gas barrier resin (primary aqueous dispersion) is, for example, 10% by mass or more, preferably 15% by mass or more, more preferably 20% by mass or more. In addition, the solid content concentration of the aqueous dispersion of the gas barrier resin (primary aqueous dispersion) is, for example, 60% by mass or less, preferably 50% by mass or less, more preferably 40% by mass or less.

The above-described aqueous dispersion of the gas barrier resin (primary aqueous dispersion) may be used as the gas barrier coating material as it is. In other words, the gas barrier coating material may consist of, for example, the above-described aqueous dispersion of the gas barrier resin (primary aqueous dispersion).

Further, the gas barrier coating material may also contain the additive. Preferably, the gas barrier coating material contains the additive. In other words, preferably, the aqueous dispersion containing the above-described gas barrier resin and the additive (secondary aqueous dispersion) is used as the gas barrier coating material.

Examples of the additive include layered inorganic compounds, thickening inhibitors, heat-resistant stabilizers, antioxidants, light-resistant stabilizers, ultraviolet absorbers, plasticizers, antistatic agents, lubricants, anti-blocking agents, pigments, dyes, crystal nucleating agents, and curing agents. These may be used alone or in combination of two or more. From the viewpoint of the gas barrier properties, as the additive, preferably, a layered inorganic compound is used. That is, the gas barrier layer 4 preferably contains the layered inorganic compound. The addition amount and the timing of addition of the additive are appropriately set in accordance with its purpose and application.

The solid content concentration of the gas barrier coating material is, for example, 10% by mass or more, preferably 15% by mass or more, more preferably 20% by mass or more. Further, the solid content concentration of the gas barrier coating material is, for example, 60% by mass or less, preferably 50% by mass or less, more preferably 40% by mass or less.

The method for coating the gas barrier coating material is not particularly limited. Examples of the coating method include dip coating methods, gravure coating methods, reverse coating methods, roll coating methods, bar coating methods, spray coating methods, and air knife coating methods. The drying conditions of the gas barrier coating material are not particularly limited. For example, the drying temperature is, for example, 40°C or more, preferably 50°C or more. Further, the drying temperature is, for example, 200°C or less, preferably 180°C or less. Further, the drying time is, for example, one second or more, preferably 30 seconds or more. Further, the drying time is, for example, 10 minutes or less, preferably five minutes or less.

Thus, the gas barrier layer 4 is formed. The amount (dry mass) of the gas barrier layer 4 is, for example, 0.1 g/m² or more, preferably 0.2 g/m² or more. Further, the amount (dry mass) of the gas barrier layer 4 is, for example, 10 g/m² or less, preferably 7 g/m² or less.

### (4) Heat Seal Layer

The heat seal layer 5 is a resin layer having heat sealability. The heat seal layer 5 is disposed on the surface of the gas barrier layer 4. That is, the heat seal layer 5 is disposed on the surface of the gas barrier layer 4 on the side where the gas barrier layer 4 is disposed with respect to the paper substrate 2. The heat seal layer 5 may be also disposed on both surfaces of the paper substrate 2 along with the gas barrier layer 4. The heat seal layer 5 is preferably disposed on only the one-side surface of the paper substrate 2 along with the gas barrier layer 4.

The heat seal layer 5 contains, for example, a heat sealable resin. More specifically, the heat seal layer 5 is formed by, for example, coating the coating material containing the heat sealable resin (hereinafter, a heat sealable coating material) onto the gas barrier layer 4 to be dried.

The heat sealable resin is a resin capable of heat sealing (heat adhesion) with each other. The heat sealable resin is not particularly limited, and a known heat sealable resin is used. More specifically, examples of the heat sealable resin include polyolefin resins, acrylic resins, and polyurethane resins. Further, examples of the heat sealable resin include resin compositions containing the polyolefin resin and the (meth)acrylic resin (mixed resin). Further, examples of the heat sealable resin include composite resins containing the polyolefin resin and the (meth)acrylic resin (polyolefin-(meth)acrylic composite resin). The heat sealable resin may be the same as the filling resin. These may be used alone or in combination of two or more. As the heat sealable resin, preferably, a polyolefin resin and a (meth)acrylic resin are used, more preferably, a polyolefin resin is used alone and a polyolefin resin and a (meth)acrylic resin are used in combination, further more preferably, a polyolefin resin and a (meth)acrylic resin are used in combination, particularly preferably, a composite resin containing the polyolefin resin and the (meth)acrylic resin (polyolefin-(meth)acrylic composite resin) is used. In addition, the heat sealable resin is preferably the same as the filling resin.

The heat sealable resin is, for example, prepared as the solution and/or the dispersion liquid dissolved and/or dispersed in the solvent. For example, the heat sealable resin is synthesized in the solvent. Thus, the solution and/or the dispersion liquid of the heat sealable resin are/is obtained.

The solvent is not particularly limited, and examples thereof include water, methanol, ethanol, propanol, isopropanol, acetone, methyl ethyl ketone, ethyl acetate, tetrahydrofuran, and acetonitrile. These solvents may be used alone or in combination of two or more. The solid content concentration of the filling coating material is not particularly limited, and is appropriately set in accordance with its purpose and application.

More specifically, examples of the heat sealable coating material include a polyolefin dispersion containing the polyolefin resin, an acrylic emulsion containing the acrylic resin, and a polyurethane dispersion containing the polyurethane resin. As the heat sealable coating material, preferably, a polyolefin dispersion is used.

The heat sealable coating material may also contain the additive. In other words, the heat sealable coating material may contain the above-described heat sealable resin and the additive. Examples of the additive include heat-resistant stabilizers, antioxidants, light-resistant stabilizers, ultraviolet absorbers, plasticizers, antistatic agents, lubricants, anti-blocking agents, pigments, dyes, crystal nucleating agents, and curing agents. These may be used alone or in combination of two or more.

The solid content concentration of the heat sealable coating material is, for example, 10% by mass or more, preferably 15% by mass or more, more preferably 20% by mass or more. Further, the solid content concentration of the heat sealable coating material is, for example, 60% by mass or less, preferably 50% by mass or less, more preferably 40% by mass or less.

The method for coating the heat sealable coating material is not particularly limited. Examples of the coating method include dip coating methods, gravure coating methods, reverse coating methods, roll coating methods, bar coating methods, spray coating methods, and air knife coating methods. The drying conditions of the gas barrier coating material are not particularly limited. For example, the drying temperature is, for example, 40°C or more, preferably 50°C or more. Further, the drying temperature is, for example, 200°C or less, preferably 180°C or less. Further, the drying time is, for example, one second or more, preferably 30 seconds or more. Further, the drying time is, for example, 10 minutes or less, preferably five minutes or less.

Thus, the heat seal layer 5 is formed. The amount (dry mass) of the heat seal layer 5 is set from the viewpoint of achieving both the gas barrier properties and the heat sealability.

More specifically, from the viewpoint of the heat sealability, the amount (dry mass) of the heat seal layer 5 is, for example, 1.0 g/m² or more, preferably above 1.0 g/m², more preferably 1.1 g/m² or more, further more preferably 1.5 g/m² or more, particularly preferably 1.8 g/m² or more. Further, from the viewpoint of the gas barrier properties, the amount (dry mass) of the heat seal layer 5 is, for example, 7.0 g/m² or less, preferably below 5.0 g/m², more preferably 4.9 g/m² or less, further more preferably 4.0 g/m² or less, particularly preferably 3.5 g/m² or less.

### (5) Laminate

The total thickness of the laminate 1 is, for example, 5 µm or more, preferably 10 µm or more. Also, the total thickness of the laminate 1 is, for example, 1 mm or less, preferably, 0.5 mm or less.

### 2. Function and Effect

The above-described laminate 1 includes the paper substrate 2, the filling layer 3, and the gas barrier layer 4. Then, in the above-described laminate 1, the filling layer 3 contains the polyolefin resin and the (meth)acrylic resin. Therefore, the filing layer 3 has the excellent blocking resistance. That is, the above-described laminate 1 has the excellent handleability. Furthermore, since the above-described filling layer 3 contains the polyolefin resin and the (meth)acrylic resin, it has the excellent bending resistance. As a result, the laminate 1 has both the excellent handleability and the excellent bending resistance.

### 3. Application

The above-described laminate 1 is preferably used in various industrial fields requiring the gas barrier properties and the heat sealability. More specifically, the laminate 1 is preferably used as a packaging material. In other words, the packaging material preferably includes the above-described laminate 1, and more preferably consists of the above-described laminate 1.

Since such a packaging material includes the above-described laminate 1, it has both the excellent handleability and the excellent bending resistance. Such a packaging material is used in various industrial fields. Preferably, the above-described packaging material is used in the food packaging material field.

### 4. Modified Examples

The laminate 1 and the packaging material described above include the heat seal layer 5. However, the heat seal layer 5 is the optional layer. That is, the laminate 1 and the packaging material may not include the heat seal layer 5 in accordance with its purpose and application.

Further, when the laminate 1 and the packaging material include the heat seal layer 5, as described above, the heat seal layer 5 may be also directly laminated on the gas barrier layer 4. Further, the heat seal layer 5 may be also bonded to the gas barrier layer 4 by a known adhesive. That is, an adhesive layer (not shown) may be also interposed between the gas barrier layer 4 and the heat seal layer 5. Alternatively, instead of the heat seal layer 5 or along with the heat seal layer 5, an optional functional layer may be also laminated on the gas barrier layer 4.

### Examples

Next, the present invention is further described based on Examples and Comparative Examples. The present invention is however not limited by these Examples and Comparative Examples below. All designations of "part" or "parts" and "%" mean part or parts by mass and % by mass, respectively, unless otherwise particularly specified. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS".

### 1. Paper Substrate

### Preparation Example 1

As the paper substrate, the following paper was prepared.
(1) Ginchiku: single glazed (unbleached) kraft paper, trade name: "Ginchiku", manufactured by NIPPON PAPER INDUSTRIES CO., LTD., basis weight of 41.7 g/m², 66.6 g/m², 83.3 g/m²
(2) Hakugin: single glazed (bleached) kraft paper, trade name: "Hakugin", manufactured by NIPPON PAPER INDUSTRIES CO., LTD., basis weight of 30 g/m², 65 g/m²
(3) Kinshachihoko: pure white roll paper, trade name: "Kinshachihoko", manufactured by Daio Paper Corporation, basis weight of 30 g/m², 65 g/m²
(4) Nagoya Sarashi Ryuo: single glazed (bleached) kraft paper, trade name: "Nagoya Sarashi Ryuo", manufactured by Daio Paper Corporation, basis weight of 60 g/m²
(5) Glassine paper: trade name: "Thick White Glassine", manufactured by NIPPON PAPER INDUSTRIES CO., LTD., basis weight of 30.5 g/m²
(6) Coated paper: trade name: "N Coat Wrap L", manufactured by NIPPON PAPER INDUSTRIES CO., LTD., basis weight of 65 g/m²
(7) Cup base paper: trade name: "Cut Base Paper (no-coat product)", manufactured by NIPPON PAPER INDUSTRIES CO., LTD., basis weight of 150 g/m²

### 2. Gas Barrier Coating Material

### Synthesis Example 1 (Primary Polyurethane Dispersion)

The following components were mixed and reacted at 65 to 70°C in a nitrogen atmosphere until the isocyanate group concentration (NCO%) was 6.11% by mass or less. Thus, a transparent isocyanate group-terminated prepolymer reaction product liquid was obtained.

1,3-xylylene diisocyanate
(TAKENATE500, 1,3-XDI, manufactured by Mitsui Chemicals, Inc.): 143.2 parts by mass methylenebis(cyclohexylisocyanate)
(VestanatH₁₂MDI, H₁₂MDI, manufactured by Evonik Industries AG): 25.0 parts by mass ethylene glycol: 29.2 parts by mass
trimethylolpropane: 2.7 parts by mass
dimethylolpropionic acid: 14.8 parts by mass
methyl ethyl ketone (solvent): 121.6 parts by mass

Next, the reaction product liquid was cooled to 40°C. Next, 11.0 parts by mass of triethylamine (TEA) was added to the reaction product liquid. Thus, the isocyanate group-terminated prepolymer was neutralized.

Next, a homodisper was used, and the reaction product liquid was dispersed in 838.0 parts by mass of ion-exchanged water. Next, an amine aqueous solution was added to the obtained dispersion liquid, and subjected to the chain extension reaction. In addition, the reaction product liquid of the chain extension reaction was aged for one hour. Thus, the gas barrier polyurethane resin was obtained. The amine aqueous solution was a liquid mixture of 48.4 parts by mass of ion-exchanged water and 24.2 parts by mass of 2-((2-aminoethyl)amino)ethanol. Thereafter, an evaporator was used, and the methyl ethyl ketone and the ion-exchanged water were distilled off from the reaction product liquid. Thus, the solid content concentration was adjusted to 30% by mass.

As described above, the primary polyurethane dispersion (primary PUD) obtained by water-dispersing the gas barrier polyurethane resin was obtained.

A pH of the primary polyurethane dispersion (primary PUD) was 8.6. In addition, an average particle size of the polyurethane dispersion (primary PUD) was 58 nm. The average particle size was measured with a dynamic light scattering method (measurement device: "FPAR-1000", manufactured by Otsuka Electronics Co., Ltd.) (hereinafter, the same applies).

### Preparation Example 1 (Secondary Polyurethane Dispersion)

The dispersion liquid of the layered inorganic compound (trade name: NTS-10NC, manufactured by TOPY INDUSTRIES, LIMITED, solid content concentration of 10.7%) (hereinafter, synthesis mica 1) was prepared. The dispersion liquid of the layered inorganic compound and the water were mixed for five minutes. Thus, the dispersion liquid of the additive was obtained.

The primary PUD of Synthesis Example 1 and the dispersion liquid of the additive were mixed for five minutes so that a mass ratio of the solid content (polyurethane resin: layered inorganic compound) of the polyurethane resin to the layered inorganic compound was 5:15.

Thus, a secondary polyurethane dispersion (secondary PUD) was obtained in which the gas barrier polyurethane resin and the additive (layered inorganic compound) were water-dispersed. The solid content concentration of the secondary PUD was 15% by mass. The secondary PUD was used as a gas barrier coating material 1.

### Preparation Example 2 (Secondary Polyurethane Dispersion)

The dispersion liquid of the layered inorganic compound (trade name: ME300-B4T, manufactured by Katakura Co-op Agri Corporation, solid content concentration of 7.8%) (hereinafter, synthesis mica 2) was prepared.

The secondary polyurethane dispersion (secondary PUD) was obtained in the same manner as Preparation Example 1, except that the synthesis mica 2 was used instead of the synthesis mica 1. The solid content concentration of the secondary PUD was 15% by mass. The secondary PUD was used as a gas barrier coating material 2.

### Preparation Example 3 (Secondary Polyurethane Dispersion)

The dispersion liquid of the layered inorganic compound (trade name: KUNIPIA RC-I, synthesis mica 3, manufactured by KUNIMINE INDUSTRIES CO., LTD., solid content concentration of 4.0%) was prepared.

The secondary polyurethane dispersion (secondary PUD) was obtained in the same manner as Preparation Example 1, except that the synthesis mica 3 was used instead of the synthesis mica 1. The solid content concentration of the secondary PUD was 15% by mass. The secondary PUD was used as a gas barrier coating material 3.

### Preparation Example 4 (PVA)

Polyvinyl alcohol (trade name: Kuraray Poval PVA117, manufactured by KURARAY CO., LTD.) (hereinafter, PVA) was prepared. PVA was dispersed in the water. Thus, the aqueous dispersion of PVA was obtained. The solid content concentration of the aqueous dispersion of PVA was adjusted to 30% by mass.

The secondary polyurethane dispersion (secondary PUD) was obtained in the same manner as Preparation Example 2, except that the aqueous dispersion liquid of PVA was used instead of the primary PUD. The solid content concentration of the secondary PUD was 15% by mass. The secondary PUD was used as a gas barrier coating material 4.

### 3. Filling Coating Material

### Synthesis Example 2 (Polyolefin Dispersion (PO))

As the polyolefin resin, an ethylene-methacrylic acid copolymer (EMAA) was prepared. The content ratio of the constitutional unit derived from the ethylene was 80.0% by mass, and the content ratio of the constitutional unit derived from the methacrylic acid was 20.0% by mass with respect to the total amount of the ethylene-methacrylic acid copolymer.

In a reaction vessel, 100 parts by mass of ethylene-methacrylic acid copolymer, 19.0 parts by mass of 15% ammonia water, and 335 parts by mass of deionized water were stirred and held at 150°C for four hours. Thus, the polyolefin resin was dispersed in the water, thereby obtaining a polyolefin dispersion (PO: EMAA dispersion). The average particle size (dynamic light scattering method) of the polyolefin dispersion (PO) was 38 nm, and the solid content concentration was 22% by mass.

### Synthesis Example 3 (Acryl Emulsion (Ac))

A reaction vessel equipped with a stirrer, a reflux condenser, a dropping device, and a thermometer was charged with 2193 parts by mass of ion-exchanged water (solvent) and 2.5 parts by mass of sodium dodecyl sulfate (surfactant). The contents of the reaction vessel were heated with stirring and nitrogen substitution until the temperature thereof reached 75°C.

While keeping the internal temperature of the reaction vessel at 75°C, 12.5 parts by mass of potassium persulfate (polymerization initiator) was added to the reaction vessel and dissolved in the contents of the reaction vessel. Thereafter, a monomer emulsion product which was prepared in advance was continuously added dropwise to the reaction vessel over a period of five hours.

The monomer emulsion product was a raw material composition containing the following components:
Ion-exchanged water (solvent): 900 parts by mass
Sodium dodecyl sulfate (surfactant): 5 parts by mass
2-ethylhexyl acrylate (raw material monomer): 1608 parts by mass
Styrene (raw material monomer): 893 parts by mass

After the dropping of the monomer emulsion product was completed, the contents of the reaction vessel were aged for three hours. Thus, the raw material monomer was polymerized, thereby obtaining the (meth)acrylic resin. Further, the acrylic emulsion in which the (meth)acrylic resin was water-dispersed was obtained.

The acrylic emulsion was cooled to the room temperature. Thereafter, the ion-exchanged water and the ammonia water (neutralizing agent) were added to the acrylic emulsion to adjust the solid content concentration to 42% by mass, and the pH thereof was adjusted to 8.0.

Thus, the acrylic emulsion (Ac) obtained by water-dispersing the (meth)acrylic resin was obtained. The average particle size of the acrylic emulsion was 257 nm.

The glass transition temperature (theoretical value) of the (meth)acrylic resin was calculated based on the formula of Fox. The glass transition temperature (theoretical value) of the (meth)acrylic resin was -30°C.

### Synthesis Example 4 (Polyolefin-(Meth)acrylic Composite Resin Emulsion)

The reaction vessel equipped with the stirrer, the reflux condenser, the dropping device, and the thermometer was charged with 1031.6 parts by mass of polyolefin dispersion (PO). The contents of the reaction vessel were heated with stirring and nitrogen substitution until the temperature thereof reached 75°C.

While keeping the internal temperature of the reaction vessel at 75°C, 0.13 parts by mass of potassium persulfate (polymerization initiator) was added to the reaction vessel and dissolved in the contents of the reaction vessel. Thereafter, the monomer emulsion product which was prepared in advance was continuously added dropwise to the reaction vessel over a period of five hours.

The monomer emulsion product was the raw material composition containing the following components:
ion-exchange water (solvent): 20 parts by mass
sodium dodecyl sulfate (surfactant): 0.05 parts by mass
2-ethylhexyl acrylate (raw material monomer): 16.1 parts by mass
styrene (raw material monomer): 8.9 parts by mass

After the dropping of the monomer emulsion product was completed, the contents of the reaction vessel were aged for three hours. Thus, in the polyolefin dispersion (PO), the raw material monomer was polymerized, thereby synthesizing the (meth)acrylic resin (Ac). Thus, the polyolefin-(meth)acrylic composite resin (PO/Ac) was obtained. Further, a composite resin emulsion in which the polyolefin-(meth)acrylic composite resin (PO/Ac) was water-dispersed was obtained.

The polyolefin-(meth)acrylic composite resin (PO/Ac) had a core-shell structure. In the core-shell structure, the core was the polyolefin resin (PO) and the shell was the (meth)acrylic resin (Ac). Further, the glass transition temperature (formula of Fox) of the (meth)acrylic resin contained in the polyolefin-(meth)acrylic composite resin (PO/Ac) was -30°C.

The composite resin emulsion was cooled to the room temperature. Thereafter, the ion-exchanged water was added to the composite resin emulsion to adjust the solid content concentration to 25% by mass, and the pH thereof was adjusted to 10.0.

Thus, the composite resin emulsion was obtained in which the polyolefin-(meth)acrylic composite resin (PO/Ac) was water-dispersed. The average particle size of the composite resin emulsion was 73 nm. The composite resin emulsion (solid content concentration of 25% by mass) was used as the filling coating material.

### Synthesis Examples 5 to 30 (Polyolefin-(meth)acrylic Composite Resin Emulsion)

A mixing formulation of the monomer emulsion product was changed to the mixing formulations shown in Tables 1 to 3. The composite resin emulsion obtained by water-dispersing the polyolefin-(meth)acrylic composite resin was obtained in the same manner as Synthesis Example 4 except for the different mixing formulations. The composite resin emulsion (solid content concentration of 25% by mass) was used as the filling coating material. In addition, the glass transition temperature (formula of Fox) of the (meth)acrylic resin in each of the mixing formulations is shown in Tables 1 to 3.

### Mixed Preparation Examples 1 to 9 (Mixed Resin)

The polyolefin dispersion (EMAA dispersion) of Synthesis Example 1 and the acrylic emulsion of Synthesis Example 3 were mixed in accordance with the mixing formulation shown in Table 4. Further, the ion-exchanged water was added to the mixture to adjust the solid content concentration to 25% by mass. Thus, a liquid mixture (Po+Ac) containing the polyolefin resin and the (meth)acrylic resin was obtained. The liquid mixture (Po+Ac) containing the polyolefin resin and the (meth)acrylic resin was used as the filling coating material.

### 4. Heat Sealable Coating Material

### Preparation Example 2 (HS-POD)

The dispersion of the polyolefin resin having the heat sealability (HS) (trade name: CHEMIPEARL S500NW, manufactured by Mitsui Chemicals, Inc.) (hereinafter, HS-POD) was prepared. HS-POD was used as the heat sealable coating material.

### Preparation Example 3 (HS-POF)

A film of the polyolefin resin having the heat sealability (HS) (trade name: "HC-40", thickness of 40 µm, manufactured by Mitsui Chemicals Tohcello Inc.) (hereinafter, HS-POF) was prepared. POF was used as the heat seal layer.

### 5. Laminate

### Examples 1 to 57 and Comparative Examples 1 to 3 (Laminate)

The filling coating material was coated onto one surface (smooth surface or non-smooth surface) of the paper substrate in combinations shown in Tables 5 to 12 with a bar coater. A coating amount was adjusted so that the dry mass was the amount (g/m²) shown in Tables 5 to 10. Next, the coating film of the filling coating material was dried at 120°C for 60 seconds. Thus, the filling layer was formed.

Next, the gas barrier coating material was coated onto the surface of the filling layer in combinations shown in Tables 5 to 12 with the bar coater. The coating amount was adjusted so that the dry mass was the amount (g/m²) shown in Tables 5 to 12. Next, the coating film of the gas barrier coating material was dried at 120°C for 60 seconds. Thus, the gas barrier layer was formed on the surface of the filling layer. Thus, the laminate was obtained. A layer structure of the laminate was as follow.

### Paper substrate/ filling layer/ gas barrier layer

Further, in Examples 10, 56, and 57, the heat sealable coating material was coated onto the surface of the gas barrier layer with the bar coater. In Example 10, HS-POD of Preparation Example 2 was used as the heat sealable coating material. In addition, in Example 56, the polyolefin-(meth)acrylic composite resin emulsion of Synthesis Example 6 was used as the heat sealable coating material. In addition, in Example 57, the acrylic emulsion of Synthesis Example 3 was used as the heat sealable coating material. Also, in Examples 10, 56, and 57, the coating amount of the heat sealable coating material was adjusted so that the dry mass was 3 g/m². Next, the coating film of the heat sealable coating material was dried at 120°C for 60 seconds. Thus, the heat seal layer was formed on the surface of the gas barrier layer. Thus, the laminate was obtained. The layer structure of the laminate was as follow.

### Paper substrate/ filling layer/ gas barrier layer/ heat seal layer

In addition, in Example 11, a heat sealable film was attached to the surface of the gas barrier layer with an adhesive (trade name: A-616/ trade name: A-65 (manufactured by Mitsui Chemicals, Inc.)). Thereafter, the adhesive was cured at 40°C for two days. Thus, the laminate was obtained. The layer structure of the laminate was as follows.

### Paper substrate/ filling layer/ gas barrier layer/ adhesive layer/ heat seal layer

### 6. Evaluation

### (1) Oxygen Permeability Amount (OTR) of Laminate

An oxygen permeability amount (cc/m²·day·atm) of the laminate before bending was measured using an oxygen permeability analyzer (manufactured by AMTEK MOCON, OX-TRAN 2/22H). The measurement temperature was 20°C. Further, the relative humidity was 80%RH.

Further, the laminate was bent at 25°C at a pressure of 2 kg/cm² for 10 seconds so that the coated surfaces (the filling layer and the gas barrier layer) were inside. Further, a bending direction was changed by 90°C so that cross folds were made, and the laminate was bent again at the pressure of 2 kg/cm² for 10 seconds.

Then, the oxygen permeability amount (cc/m²·day·atm) of the laminate after the bending was measured under the above-described conditions. The results are shown in Tables 5 to 12.

### (2) Water Vapor Permeability Amount (WVTR) of Laminate

The water vapor permeability amount (g/m²·day) was measured using a water vapor permeability analyzer (manufactured by AMTEK MOCON, PARMATRAN-W 3/34 G). The measurement temperature was 40°C. Further, the relative humidity was 90%RH.

Further, the laminate was bent at 25°C at the pressure of 2 kg/cm² for 10 seconds so that the coated surfaces (the filling layer and the gas barrier layer) were inside. Further, the bending direction was changed by 90°C so that the cross folds were made, and the laminate was bent again at the pressure of 2 kg/cm² for 10 seconds.

Then, the water vapor permeability amount (g/m²·day) of the laminate after the bending was measured under the above-described conditions. The results are shown in Tables 5 to 12.

### (3) Blocking Resistance

The laminate (a two-layered body consisting of the paper substrate and the filling layer) before forming the gas barrier layer was prepared. The filling layer of the two-layered body and the printed surface of the paper packaging material (KitKat biscuit taste (trade name), manufactured by Nestle Ltd.) were compressively bonded to each other with a heat sealer. A compressive bonding temperature was 30°C, compressive bonding force was 0.5 kg/cm², and compressive bonding time was 10 seconds. After the compressive bonding, the blocking resistance of the filling layer was evaluated with the following criteria. The results are shown in Tables 5 to 12.

5: two-layered body and paper packaging material were not attached to each other.
4: two-layered body and paper packaging material were attached, but detached spontaneously.
3: two-layered body and paper packaging material were attached, but no cohesive failure or ink transfer was confirmed even when they were detached by hand.
2: two-layered body and paper packaging material were attached. When they were detached by hand, cohesive failure or ink transfer was confirmed.
1: two-layered body and paper packaging material were attached. When they were detached by hand, the paper substrate was broken.

### (4) Storage Stability of Filling Coating Material

Immediately after production of the filling coating material, the viscosity at 25°C of the filling coating material was measured under the following conditions.
Measurement method: measurement method of apparent viscosity with Brookfield-type rotational viscometer
Equipment: B-type viscometer (model number: RB-85), manufactured by Toki Sangyo Co., Ltd.
Rotor: No. 2
Number of rotations: 60 rpm

The filling coating material was stored at 60°C for two weeks. After the storage, the viscosity at 25°C of the filling coating material was measured under the above-described conditions.

Then, an increase rate of the viscosity due to the storage was calculated by the following formula. The results are shown in Tables 5 to 12.

Increase rate of viscosity (%)= [viscosity after storage/ viscosity before storage]× 100

### [Table 1]

**Table 1**

| No. | | | | Synthesis Ex. 4 | Synthesis Ex. 5 | Synthesis Ex. 6 | Synthesis Ex. 7 | Synthesis Ex. 8 | Synthesis Ex. 9 | Synthesis Ex. 10 | Synthesis Ex. 11 | Synthesis Ex. 12 |
|---|---|---|---|---|---|---|---|---|---|---|---|---|
| Mixing Formulation (based on mass) | Core Polyolefin Resin | | Synthesis Ex. 2 (POD, 22%) | 1031.6 | 917.0 | 687.8 | 573.1 | 458.5 | 229.3 | 114.6 | 1088.9 | 57.3 |
| | Shell (Meth)acrylic Resin | Raw Material Monomer | Styrene | 8.9 | 17.9 | 35.7 | 44.6 | 53.6 | 71.4 | 80.3 | 4.5 | 84.8 |
| | | | 2-ethylhexyl acrylate | 16.1 | 32.2 | 64.3 | 80.4 | 96.5 | 128.6 | 144.7 | 8.0 | 152.7 |
| | | Initiator | Sodium Persulfate | 0.1 | 0.3 | 0.5 | 0.6 | 0.8 | 1.0 | 1.1 | 0.1 | 1.2 |
| Constitutional Unit (% by mass) | Polyolefin Resin | Ethylene | | 80.0 | 80.0 | 80.0 | 80.0 | 80.0 | 80.0 | 80.0 | 80.0 | 80.0 |
| | | Methacrylic Acid | | 20.0 | 20.0 | 20.0 | 20.0 | 20.0 | 20.0 | 20.0 | 20.0 | 20.0 |
| | (Meth)acrylic Resin | Styrene | | 35.7 | 35.7 | 35.7 | 35.7 | 35.7 | 35.7 | 35.7 | 35.7 | 35.7 |
| | | 2-ethylhexyl acrylate | | 64.3 | 64.3 | 64.3 | 64.3 | 64.3 | 64.3 | 64.3 | 64.3 | 64.3 |
| Polyolefin Resin/ (Meth)acrylic Resin (mass ratio) | | | | 90/10 | 80/20 | 60/40 | 50/50 | 40/60 | 20/80 | 10/90 | 95/5 | 5/95 |
| Tg of (Meth)acrylic Resin (°C) | | | | -30 | | | | | | | | |

### [Table 2]

**Table 2**

| No. | | | | Synthesis Ex. 13 | Synthesis Ex. 14 | Synthesis Ex. 15 | Synthesis Ex. 16 | Synthesis Ex. 17 | Synthesis Ex. 18 | Synthesis Ex. 19 | Synthesis Ex. 20 | Synthesis Ex. 21 |
|---|---|---|---|---|---|---|---|---|---|---|---|---|
| Mixing Formulation (based on mass) | Core Polyolefin Resin | | Synthesis Ex. 2 (POD, 22%) | 917.0 | 917.0 | 917.0 | 917.0 | 917.0 | 917.0 | 917.0 | 917.0 | 917.0 |
| | Shell (Meth)acrylic Resin | Raw Material Monomer | Styrene | 0.0 | 5.1 | 9.7 | 24.7 | 27.8 | 30.6 | 35.8 | 42.3 | 44.2 |
| | | | 2-ethylhexyl acrylate | 50.0 | 44.9 | 40.3 | 25.3 | 22.3 | 19.4 | 14.3 | 7.8 | 5.8 |
| | | Initiator | Sodium Persulfate | 0.3 | 0.3 | 0.3 | 0.3 | 0.3 | 0.3 | 0.3 | 0.3 | 0.3 |
| Constitutional Unit (% by mass) | Polyolefin Resin | Ethylene | | 80.0 | 80.0 | 80.0 | 80.0 | 80.0 | 80.0 | 80.0 | 80.0 | 80.0 |
| | | Methacrylic Acid | | 20.0 | 20.0 | 20.0 | 20.0 | 20.0 | 20.0 | 20.0 | 20.0 | 20.0 |
| | (Meth)actylic Resin | Styrene | | 0.0 | 10.2 | 19.4 | 49.4 | 55.4 | 61.2 | 71.5 | 84.4 | 88.4 |
| | | 2-cthylhexyl acrylate | | 100.0 | 89.8 | 80.6 | 50.6 | 44.6 | 38.8 | 28.5 | 15.6 | 11.6 |
| Polyolefin Resin/ (Meth)acrylic Resin (mass ratio) | | | | 80/20 | | | | | | | | |
| Tg of (Meth)acrylic Resin (°C) | | | | -70 | -60 | -50 | -10 | 0 | 10 | 30 | 60 | 70 |

**Table 3**

| No. | | | | Synthesis Ex. 22 | Synthesis Ex. 23 | Synthesis Ex. 24 | Synthesis Ex. 25 | Synthesis Ex. 26 | Synthesis Ex. 27 | Synthesis Ex. 28 | Synthesis Ex. 29 | Synthesis Ex. 30 |
|---|---|---|---|---|---|---|---|---|---|---|---|---|
| Mixing Formulation (based on mass) | Core Polyolefin Resin | | Synthesis Ex. 2 (POD, 22%) | 229.3 | 229.3 | 229.3 | 229.3 | 229.3 | 229.3 | 229.3 | 229.3 | 229.3 |
| | Shell (Meth)acrylic Resin | Raw Material Monomer | Styrene | 0.0 | 20.4 | 38.8 | 98.8 | 111.0 | 122.4 | 143.0 | 169.2 | 176.8 |
| | | | 2-ethylhexyl acrylate | 200.0 | 179.6 | 161.2 | 101.2 | 89.2 | 77.6 | 57.0 | 31.2 | 23.2 |
| | | Initiator | Sodium Persulfate | 1.0 | 1.0 | 1.0 | 1.0 | 1.0 | 1.0 | 1.0 | 1.0 | 1.0 |
| Constitutional Unit (% by mass) | Polyolefin Resin | Ethylene | | 800 | 80.0 | 80.0 | 80.0 | 80.0 | 80.0 | 80.0 | 80.0 | 80.0 |
| | | Methacrylic Acid | | 20.0 | 20.0 | 20.0 | 20.0 | 20.0 | 20.0 | 20.0 | 20.0 | 20.0 |
| | (Meth)acrylic Resin | Styrene | | 0.0 | 10.2 | 19.4 | 49.4 | 55.4 | 61.2 | 71.5 | 84.4 | 88.4 |
| | | 2-ethylhexyl acrylate | | 100.0 | 89.8 | 80.6 | 50.6 | 44.6 | 38.8 | 28.5 | 15.6 | 11.6 |
| Polyolefin Resin/ (Meth)acrylic Resin (mass ratio) | | | | 20/80 | | | | | | | | |
| Tg of (Meth)acrylic Resin (°C) | | | | -70 | -60 | -50 | -10 | 0 | 10 | 30 | 60 | 70 |

### [Table 4]

**Table 4**

| No. | | | Mixed Preparation Ex. 1 | Mixed Preparation Ex. 2 | Mixed Preparation Ex. 3 | Mixed Preparation Ex. 4 | |
|---|---|---|---|---|---|---|---|
| Mixing Formulation (Mass Ratio of Solid Content) | Synthesis Ex. 2 | Polyolefin Dispersion | 90 | 80 | 60 | 50 | |
| | Synthesis Ex. 3 | Acryl Emulsion | 10 | 20 | 40 | 50 | |

| No. | | | Mixed Preparation Ex. 5 | Mixed Preparation Ex. 6 | Mixed Preparation Ex. 7 | Mixed Preparation Ex. 8 | Mixed Preparation Ex. 9 |
|---|---|---|---|---|---|---|---|
| Mixing Formulation (Mass Ratio of Solid Content) | Synthesis Ex. 2 | Polyolefin Dispersion | 40 | 20 | 10 | 95 | 5 |
| | Synthesis Ex. 3 | Acryl Emulsion | 60 | 80 | 90 | 5 | 95 |

### [Table 5]

[0202]

**Table 5**

| No. | | | Ex. 1 | Ex. 2 | Ex. 3 | Ex. 4 | Ex. 5 | Ex. 6 | Ex. 7 |
|---|---|---|---|---|---|---|---|---|---|
| Paper Substrate | Kind | | Ginchiku | Ginchiku | Ginchiku | Ginchiku | Ginchiku | Ginchiku | Ginchiku |
| | Basis Weight | | 67 | 67 | 67 | 67 | 67 | 67 | 67 |
| | Coated Surface | | Smooth Surface | Smooth Surface | Smooth Surface | Smooth Surface | Smooth Surface | Smooth Surface | Smooth Surface |
| Filling Layer | Resin | | PO/Ac | PO/Ac | PO/Ac | PO/Ac | PO/Ac | PO/Ac | PO/Ac |
| | Mass Ratio (PO/Ac) | | 90/10 | 80/20 | 60/40 | 50/50 | 40/60 | 20/80 | 10/90 |
| | No. | | Synthesis Ex. 4 | Synthesis Ex. 5 | Synthesis Ex. 6 | Synthesis Ex. 7 | Synthesis Ex. 8 | Synthesis Ex. 9 | Synthesis Ex. 10 |
| | Tg of (Meth)acrylic Resin (°C) | | -30 | -30 | -30 | -30 | -30 | -30 | -30 |
| | Amount (g/m2) | | 12 | 12 | 12 | 12 | 12 | 12 | 12 |
| Gas Barrier Layer | Gas Barrier Coating Material | | Preparation Ex. 1 | Preparation Ex. 1 | Preparation Ex. 1 | Preparation Ex. 1 | Preparation Ex. 1 | Preparation Ex. 1 | Preparation Ex. 1 |
| | Gas Barrier Resin | | Polyurethane | Polyurethane | Polyurethane | Polyurethane | Polyurethane | Polyurethane | Polyurethane |
| | Layered Inorganic Compound | | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) |
| | Ratio of Solid Content (mass ratio) | | 85/15 | 85/15 | 85/15 | 85/15 | 85/15 | 85/15 | 85/15 |
| | Amount (g/m²) | | 3 | 3 | 3 | 3 | 3 | 3 | 3 |
| Heat Seal Layer | Kind | | - | - | - | - | - | - | - |
| | Amount (g/m2) | | 0 | 0 | 0 | 0 | 0 | 0 | 0 |
| Evaluation | Oxygen Permeability cc/(m2·d·atm) 20°C/80%RH | Before Bending | 1.5 | 1.6 | 1.5 | 1.6 | 1.5 | 1.5 | 1.5 |
| | | After Bending | 55 | 26 | 23 | 22 | 20 | 19 | 17 |
| | Water Vapor Permeability g/(m2. d) 40°C/90%RH | Before Bending | 4.9 | 4.9 | 5.7 | 5.8 | 6.2 | 6.5 | 6.8 |
| | | After Bending | 6.8 | 6.4 | 6.8 | 6.9 | 7.0 | 6.9 | 7.1 |
| | Blocking Resistance | | 5 | 5 | 4 | 4 | 3 | 3 | 3 |
| | Storage Stability | | 1.2 | 1.2 | 1.3 | 1.2 | 1.3 | 1.2 | 1.2 |

### [Table 6]

**Table 6**

| No. | | | Ex. 8 | Ex. 9 | Ex. 10 | Ex. 11 | Comparative Ex. 1 | Comparative Ex. 2 |
|---|---|---|---|---|---|---|---|---|
| Paper Substrate | Kind | | Ginchiku | Ginchiku | Ginchiku | Ginchiku | Ginchiku | Ginchiku |
| | Basis Weight | | 67 | 67 | 67 | 67 | 67 | 67 |
| | Coated Surface | | Smooth Surface | Smooth Surface | Smooth Surface | Smooth Surface | Smooth Surface | Smooth Surface |
| Filling Layer | Resin | | PO/Ac | PO/Ac | PO/Ac | PO/Ac | PO | Ac |
| | Mass Ratio (PO/Ac) | | 95/5 | 5/95 | 60/40 | 60/40 | 100/0 | 0/100 |
| | No. | | Synthesis Ex. 11 | Synthesis Ex. 12 | Synthesis Ex. 6 | Synthesis Ex. 6 | Synthesis Ex. 2 | Synthesis Ex. 3 |
| | Tg of (Meth)acrylic Resin (°C) | | -30 | -30 | -30 | -30 | - | -30 |
| | Amount (g/m2) | | 12 | 12 | 12 | 12 | 12 | 12 |
| Gas Barrier Layer | Gas Barrier Coating Material | | Preparation Ex. 1 | Preparation Ex. 1 | Preparation Ex. 1 | Preparation Ex. 1 | Preparation Ex. 1 | Preparation Ex. 1 |
| | Gas Barrier Resin | | Polyurethane | Polyurethane | Polyurethane | Polyurethane | Polyurethane | Polyurethane |
| | Layered Inorganic Compound | | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) |
| | Ratio of Solid Content (mass ratio) | | 85/15 | 85/15 | 85/15 | 85/15 | 85/15 | 85/15 |
| | Amount (g/m2) | | 3 | 3 | 3 | 3 | 3 | 3 |
| Heat Seal Layer | Kind | | - | - | HS-POD | HS-POF | - | - |
| | Amount (g/m2) | | 0 | 0 | 4.5 | 40 | 0 | 0 |
| Evaluation | Oxygen Permeability cc/(m2·d·atm) 20°C/80%RH | Before Bending | 1.1 | 1.3 | 0.7 | 0.3 | 0.9 | 1.5 |
| | | After Bending | 175 | 54 | 13 | 1.5 | >200 | 55 |
| | Water Vapor Permeability g/(m2·d) 40°C/90%RH | Before Bending | 5.0 | 7.3 | 6.2 | 3.1 | 4.9 | 7.6 |
| | | After Bending | 7.2 | 7.9 | 6.4 | 4.2 | 7.5 | 8 |
| | Blocking Resistance | | 5 | 2 | 5 | 5 | 5 | 1 |
| | Storage Stability | | 1.2 | 1.3 | | | | |

### [Table 7]

**Table 7**

| No. | | | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|
| Paper Substrate | Kind | | Ginchiku | Ginchiku | Ginchiku | Ginchiku | Ginchiku | Ginchiku | Ginchiku | Ginchiku | Ginchiku |
| | Basis Weight | | 67 | 67 | 67 | 67 | 67 | 67 | 67 | 67 | 67 |
| | Coated Surface | | Smooth Surface | Smooth Surface | Smooth Surface | Smooth Surface | Smooth Surface | Smooth Surface | Smooth Surface | Smooth Surface | Smooth Surface |
| Filling Layer | Resin | | PO/Ac | PO/Ac | PO/Ac | PO/Ac | PO/Ac | PO/Ac | PO/Ac | PO/Ac | PO/Ac |
| | Mass Ratio (PO/Ac) | | 80/20 | 80/20 | 80/20 | 80/20 | 80/20 | 80/20 | 80/20 | 80/20 | 80/20 |
| | No. | | Synthesis Ex. 13 | Synthesis Ex. 14 | Synthesis Ex. 15 | Synthesis Ex. 16 | Synthesis Ex. 17 | Synthesis Ex. 18 | Synthesis Ex. 19 | Synthesis Ex. 20 | Synthesis Ex. 21 |
| | Tg of (Meth)acrylic Resin (°C) | | -70 | -60 | -50 | -10 | 0 | 10 | 30 | 60 | 70 |
| | Amount (g/m2) | | 12 | 12 | 12 | 12 | 12 | 12 | 12 | 12 | 12 |
| Gas Barrier Layer | Gas Barrier Coating Material | | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 |
| | Gas Barrier Resin | | Polyurethane | Polyurethane | Polyurethane | Polyurethane | Polyurethane | Polyurethane | Polyurethane | Polyurethane | Polyurethane |
| | Layered Inorganic Compound | | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) |
| | Ratio of Solid Content (mass ratio) | | 85/15 | 85/15 | 85/15 | 85/15 | 85/15 | 85/15 | 85/15 | 85/15 | 85/15 |
| | Amount (g/m2) | | 3 | 3 | 3 | 3 | 3 | 3 | 3 | 3 | 3 |
| Heat Seal Layer | Kind | | - | - | - | - | - | - | - | - | - |
| | Amount (g/m2) | | 0 | 0 | 0 | 0 | 0 | 0 | 0 | 0 | 0 |
| Evaluation | Oxygen Permeability | Before Bending | 1.5 | 1.4 | 1.3 | 1.3 | 1.5 | 1.4 | 1.5 | 1.5 | 1.5 |
| | cc/(m2·d·atm) 20°C/80%RH | After Bending | 7 | 10 | 16 | 30 | 37 | 40 | 73 | 92 | 126 |
| | Water Vapor Permeability g/(m2·d) 40°C/90%RH | Before Bending | 5.0 | 5.0 | 5.1 | 5.1 | 5.3 | 5.2 | 5.3 | 5.2 | 5.3 |
| | | After Bending | 6.3 | 6.2 | 6.3 | 6.4 | 7 | 7.2 | 7.4 | 7.5 | 7.9 |
| | Blocking Resistance | | 2 | 3 | 3 | 5 | 5 | 5 | 5 | 5 | 5 |
| | Storage Stability | | | | | | | | | | |

### [Table 8]

**Table 8**

| No. | | | Ex. 21 | Ex. 22 | Ex. 23 | Ex. 24 | Ex. 25 | Ex. 26 | Ex. 27 | Ex. 28 | Ex. 29 |
|---|---|---|---|---|---|---|---|---|---|---|---|
| Paper Substrate | Kind | | Ginchiku | Ginchiku | Ginchiku | Ginchiku | Ginchiku | Ginchiku | Ginchiku | Ginchiku | Ginchiku |
| | Basis Weight | | 67 | 67 | 67 | 67 | 67 | 67 | 67 | 67 | 67 |
| | Coated Surface | | Smooth Surface | Smooth Surface | Smooth Surface | Smooth Surface | Smooth Surface | Smooth Surface | Smooth Surface | Smooth Surface | Smooth Surface |
| Filling Layer | Resin | | PO/Ac | PO/Ac | PO/Ac | PO/Ac | PO/Ac | PO/Ac | PO/Ac | PO/Ac | PO/Ac |
| | Mass Ratio (PO/Ac) | | 20/80 | 20/80 | 20/80 | 20/80 | 20/80 | 20/80 | 20/80 | 20/80 | 20/80 |
| | No. | | Synthesis Ex. 22 | Synthesis Ex. 23 | Synthesis Ex. 24 | Synthesis Ex. 25 | Synthesis Ex. 26 | Synthesis Ex. 27 | Synthesis Ex. 28 | **Synthesis** Ex. 29 | Synthesis Ex. 30 |
| | Tg of (Meth)acrylic Resin (°C) | | -70 | -60 | -50 | -10 | 0 | 10 | 30 | 60 | 70 |
| | Amount (g/m2) | | 12 | 12 | 12 | 12 | 12 | 12 | 12 | 12 | 12 |
| Gas Barrier Layer | Gas Barrier Coating Material | | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 |
| | Gas Barrier Resin | | Polyurethane | Polyurethane | Polyurethane | Polyurethane | Polyurethane | Polyurethane | Polyurethane | Polyurethane | Polyurethane |
| | Layered Inorganic Compound | | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) |
| | Ratio of Solid Content (mass ratio) | | 85/15 | 85/15 | 85/15 | 85/15 | 85/15 | 85/15 | 85/15 | 85/15 | 85/15 |
| | Amount (g/m2) | | 3 | 3 | 3 | 3 | 3 | 3 | 3 | 3 | 3 |
| Heat Seal Layer | Kind | | - | - | - | - | - | - | - | - | - |
| | Amount (g/m2) | | 0 | 0 | 0 | 0 | 0 | 0 | 0 | 0 | 0 |
| Evaluation | Oxygen Permeability cc/(m2·d·atm) 20°C/80%RH | Before Bending | 1.4 | 1.4 | 1.4 | 1.5 | 1.5 | 1.4 | 1.5 | 1.4 | 1.4 |
| | | After Bending | 8 | 11 | 20 | 26 | 34 | 40 | 67 | 78 | 103 |
| | Water Vapor Permeability g/(m2·d) 40°C/90%RH | Before Bending | 6.4 | 6.3 | 6.3 | 6.4 | 6.5 | 6.5 | 6.4 | 6.4 | 6.4 |
| | | After Bending | 6.8 | 6.8 | 6.9 | 7 | 7.5 | 7.8 | 8.1 | 8.5 | 9.5 |
| | Blocking Resistance | | 2 | 3 | 3 | 4 | 5 | 5 | 5 | 5 | 5 |
| | Storage Stability | | | | | | | | | | |

### [Table 9]

**Table 9**

| No. | | | Ex. 30 | Ex. 31 | Ex. 32 | Ex. 33 | Ex. 34 | Ex. 35 | Ex. 36 | Ex. 37 | Ex. 38 |
|---|---|---|---|---|---|---|---|---|---|---|---|
| Paper Substrate | Kind | | Ginchiku | Ginchiku | Ginchiku | Ginchiku | Ginchiku | Ginchiku | Ginchiku | Ginchiku | Ginchiku |
| | Basis Weight | | 67 | 67 | 67 | 67 | 67 | 67 | 67 | 67 | 67 |
| | Coated Surface | | Smooth Surface | Smooth Surface | Smooth Surface | Smooth Surface | Smooth Surface | Smooth Surface | Smooth Surface | Smooth Surface | Smooth Surface |
| Filling Layer | Resin | | Mixed Preparation Ex. 1 | Mixed Preparation Ex. 2 | Mixed Preparation Ex. 3 | Mixed Preparation Ex. 4 | Mixed Preparation Ex. 5 | Mixed Preparation Ex. 6 | Mixed Preparation Ex. 7 | Mixed Preparation Ex. 8 | Mixed Preparation Ex. 9 |
| | Mass Ratio (PO/Ac) | | 90/10 | 80/20 | 60/40 | 50/50 | 40/60 | 20/80 | 10/90 | 95/5 | 5/95 |
| | No. | | - | - | - | - | - | - | - | - | - |
| | Tg of (Meth)acrylic Resin (°C) | | -30 | -30 | -30 | -30 | -30 | -30 | -30 | -30 | -30 |
| | Amount (g/m2) | | 12 | 12 | 12 | 12 | 12 | 12 | 12 | 12 | 12 |
| Gas Barrier Layer | Gas Barrier Coating Material | | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 |
| | Gas Barrier Resin | | Polyurethane | Polyurethane | Polyurethane | Polyurethane | Polyurethane | Polyurethane | Polyurethane | Polyurethane | Polyurethane |
| | Layered Inorganic Compound | | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC **(Synthesis** Mica 1) |
| | Ratio of Solid Content (mass ratio) | | 85/15 | 85/15 | 85/15 | 85/15 | 85/15 | 85/15 | 85/15 | 85/15 | 85/15 |
| | Amount (g/m²) | | 3 | 3 | 3 | 3 | 3 | 3 | 3 | 3 | 3 |
| Heat Seal Layer | Kind | | - | - | - | - | - | - | - | - | - |
| | Amount (g/m2) | | 0 | 0 | 0 | 0 | 0 | 0 | 0 | 0 | 0 |
| Evaluation | Oxygen Permeability cc/(m2·d·atm) 20°C/80%RH | Before Bending | 1.5 | 1.4 | 1.5 | 1.5 | 1.5 | 1.3 | 1.5 | 1.3 | 1.4 |
| | | After Bending | 53 | 27 | 23 | 21 | 19 | 19 | 16 | 165 | 55 |
| | Water Vapor Permeability g/(m2·d) 40°C/90%RH | Before Bending | 4.9 | 4.9 | 5.6 | 5.7 | 6.0 | 6.4 | 6.9 | 4.9 | 7.4 |
| | | After Bending | 6.9 | 6.5 | 6.9 | 6.9 | 7.1 | 7.0 | 7.2 | 7.2 | 8.0 |
| | Blocking Resistance | | 5 | 5 | 5 | 4 | 3 | 3 | 3 | 5 | 2 |
| | Storage Stability | | 1.6 | 1.7 | 1.6 | 1.6 | 1.6 | 1.8 | 1.7 | 1.6 | 1.6 |

### [Table 10]

**Table 10**

| No. | | | Ex. 39 | Comparative Ex. 3 | Ex. 40 | Ex. 41 | Ex. 42 |
|---|---|---|---|---|---|---|---|
| Paper Substrate | Kind | | Ginchiku | Ginchiku | Ginchiku | Ginchiku | Ginchiku |
| | Basis Weight | | 67 | 67 | 67 | 67 | 67 |
| | Coated Surface | | Smooth Surface | Smooth Surface | Smooth Surface | Smooth Surface | Smooth Surface |
| Filling Layer | Resin | | PO/Ac | Ac | PO/Ac | PO/Ac | PO/Ac |
| | Mass Ratio (PO/Ac) | | 80/20 | 0/100 | 80/20 | 80/20 | 80/20 |
| | No. | | Synthesis Ex. 5 | Synthesis Ex. 3 | Synthesis Ex. 5 | Synthesis Ex. 5 | Synthesis Ex. 5 |
| | Tg of (Meth)acrylic Resin (°C) | | -30 | -30 | -30 | -30 | -30 |
| | Amount (g/m²) | | 12 | 12 | 12 | 12 | 12 |
| Gas Barrier Layer | Gas Barrier Coating Material | | Preparation Ex. 4 | Preparation Ex. 4 | Preparation Ex. 2 | Preparation Ex. 3 | Preparation Ex. 1 |
| | Gas Barrier Resin | | PVA | PVA | Polyurethane | Polyurethane | Polyurethane |
| | Layered Inorganic Compound | | NTS10NC (Synthesis Mica 1) | NTS10NC (Synthesis Mica 1) | ME-300B4T (Synthesis Mica 2) | KUNIPIA RC-I (Synthesis Mica 3) | NTS10NC (Synthesis Mica 1) |
| | Ratio of Solid Content (mass ratio) | | 85/15 | 85/15 | 85/15 | 85/15 | 85/15 |
| | Amount (g/m2) | | 3 | 3 | 3 | 3 | 6 |
| Heat Seal Layer | Kind | | - | - | - | | - |
| | Amount (g/m2) | | 0 | 0 | 0 | 0 | 0 |
| Evaluation | Oxygen Permeability cc/(m2·d·atm) 20°C/80%RH | Before Bending | 1.4 | 1.3 | 1.4 | 7.3 | 1.1 |
| | | After Bending | 31 | 48 | 25 | 36 | 65 |
| | Water Vapor Permeability g/(m2·d) 40°C/90%RH | Before Bending | 70 | 91 | 9.5 | 19 | 3.1 |
| | | After Bending | 78 | 95 | 12 | 24 | 11 |
| | Blocking Resistance | | 5 | 1 | 5 | 5 | 5 |
| | Storage Stability | | | | | | |

### [Table 11]

**Table 11**

| No. | | | Ex. 43 | Ex. 44 | Ex. 45 | Ex. 46 | Ex. 47 | Ex. 48 | Ex. 49 | Ex. 50 |
|---|---|---|---|---|---|---|---|---|---|---|
| Paper Substrate | Kind | | Ginchiku | Ginchiku | Hakugin | Hakugin | Kinshachihoko | Kinshachihoko | Nagoya Sarashi Ryuo | Nagoya Sarashi Ryuo |
| | Basis Weight | | 41.7 | 83.3 | 30 | 65 | 30 | 65 | 60 | 120 |
| | Coated Surface | | Smooth Surface | Smooth Surface | Smooth Surface | Smooth Surface | Smooth Surface | Smooth Surface | Smooth Surface | Smooth Surface |
| Filling Layer | Resin | | PO/Ac | PO/Ac | PO/Ac | PO/Ac | PO/Ac | PO/Ac | PO/Ac | PO/Ac |
| | Mass Ratio (PO/Ac) | | 80/20 | 80/20 | 80/20 | 80/20 | 80/20 | 80/20 | 80/20 | 80/20 |
| | No. | | Synthesis Ex. 5 | Synthesis Ex. 5 | Synthesis Ex. 5 | Synthesis Ex. 5 | Synthesis Ex. 5 | Synthesis Ex. 5 | Synthesis Ex. 5 | Synthesis Ex. 5 |
| | Tg of (Meth)acrylic Resin (°C) | | -30 | -30 | -30 | -30 | -30 | -30 | -30 | -30 |
| | Amount (g/m2) | | 12 | 12 | 12 | 12 | 12 | 12 | 12 | 12 |
| Gas Barrier Layer | Gas Barrier Coating Material | | Preparation Ex. 1 | Preparation Ex. 1 | Preparation Ex. 1 | Preparation Ex. 1 | Preparation Ex. 1 | Preparation Ex. 1 | Preparation Ex. 1 | Preparation Ex. 1 |
| | Gas Barrier Resin | | Polyurethane | Polyurethane | Polyurethane | Polyurethane | Polyurethane | Polyurethane | Polyurethane | Polyurethane |
| | Layered Inorganic Compound | | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) |
| | Ratio of Solid Content (mass ratio) | | 85/15 | 85/15 | 85/15 | 85/15 | 85/15 | 85/15 | 85/15 | 85/15 |
| | Amount (g/m2) | | 3 | 3 | 3 | 3 | 3 | 3 | 3 | 3 |
| Heat Seal Layer | Kind | | | | | | | | | |
| | Amount *(g*/*m2)* | | 0 | 0 | 0 | 0 | 0 | 0 | 0 | 0 |
| Evaluation | Oxygen Permeability cc/(m2·d·atm) 20°C/80%RH | Before Bending | 1.5 | 1.6 | 1.4 | 1.4 | 1.5 | 1.4 | 1.4 | 1.4 |
| | | After Bending | 26 | 28 | 23 | 21 | 24 | 22 | 25 | 22 |
| | Water Vapor Permeability g/(m2·d) 40°C/90%RH | Before Bending | 5.1 | 5.3 | 5.0 | 4.9 | 5.0 | 4.9 | 5.1 | 5.2 |
| | | After Bending | 6.3 | 6.4 | 6.2 | 6.3 | 6.3 | 6.4 | 6.3 | 6.6 |
| | Blocking Resistance | | 5 | 5 | 5 | 5 | 5 | 5 | 5 | 5 |
| | Storage Stability | | | | | | | | | |

### [Table 12]

**Table 12**

| No. | | | Ex. 51 | Ex. 52 | Ex. 53 | Ex. 54 | Ex. 55 | Ex. 56 | Ex. 57 |
|---|---|---|---|---|---|---|---|---|---|
| Paper Substrate | Kind | | Glassine Paper | Coated Paper | Cup Base Paper | Ginchiku | Ginchiku | Ginchiku | Ginchiku |
| | Basis Weight | | 30.5 | 65 | 150 | 67 | 67 | 67 | 67 |
| | Coated Surface | | Smooth Surface | Smooth Surface | Smooth Surface | Non-Smooth Surface | **Non-Smooth** Surface | Smooth Surface | Smooth Surface |
| Filling Layer | Resin | | PO/Ac | PO/Ac | PO/Ac | PO/Ac | PO/Ac | PO/Ac | PO/Ac |
| | Mass Ratio (PO/Ac) | | 80/20 | 80/20 | 80/20 | 80/20 | 20/80 | 60/40 | 60/40 |
| | No. | | Synthesis Ex. 5 | Synthesis Ex. 5 | Synthesis Ex. 5 | Synthesis Ex. 5 | Synthesis Ex. 9 | Synthesis Ex. 6 | Synthesis Ex. 6 |
| | Tg of (Meth)acrylic Resin (°C) | | -30 | -30 | -30 | -30 | -30 | -30 | -30 |
| | Amount (g/m2) | | 12 | 12 | 12 | 12 | 12 | 12 | 12 |
| Gas Barrier Layer | Gas Barrier Coating Material | | Preparation Ex. 1 | Preparation Ex. 1 | Preparation Ex. 1 | Preparation Ex. 1 | Preparation Ex. 1 | Preparation Ex. 1 | Preparation Ex. 1 |
| | Gas Barrier Resin | | Polyurethane | Polyurethane | Polyurethane | Polyurethane | Polyurethane | Polyurethane | Polyurethane |
| | Layered Inorganic Compound | | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) | NTS10NC (Synthesis Mica 1) |
| | Ratio of Solid Content (mass ratio) | | 85/15 | 85/15 | 85/15 | 85/15 | 85/15 | 85/15 | 85/15 |
| | Amount (g/m2) | | 3 | 3 | 3 | 3 | 3 | 3 | 3 |
| Heat Seal Layer | Kind | | - | - | - | - | - | Synthesis Ex. 6 | Synthesis Ex. 3 |
| | Amount (g/m2) | | 0 | 0 | 0 | 0 | 0 | 3.0 | 5.5 |
| Evaluation | Oxygen Permeability cc/(m2·d·atm) 20°C/80%RH | Before Bending | 1.2 | 1.3 | 1.5 | 1.5 | 1.7 | 0.4 | 1.2 |
| | | After Bending | 20 | 21 | 43 | 45 | 35 | 12.1 | 12.5 |
| | Water Vapor Permeability g/(m2·d) 40°C/90%RH | Before Bending | 5.1 | 5.2 | 5.3 | 5.2 | 6.6 | 4.9 | 5.5 |
| | | After Bending | 6.2 | 6.3 | 6.7 | 6.9 | 7.0 | 5.1 | 5.8 |
| | Blocking Resistance | | 5 | 5 | 5 | *5* | 3 | 5 | *5* |
| | Storage Stability | | | | | | | 1.2 | 1.2 |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

### INDUSTRIAL APPLICATION

The laminate and the packaging material of the present invention are preferably used in the food packaging material field.

### Description of Reference Numerals

- 1: Laminate
- 2: Substrate
- 3: Filling layer
- 4: Gas barrier layer
- 5: Heat seal layer

## Claims

1. A laminate comprising:
a paper substrate,
a filling layer disposed on at least one side of the paper substrate, and
a gas barrier layer disposed on at least one side of the filling layer, wherein
the filling layer contains a polyolefin resin and a (meth)acrylic resin.

2. The laminate according to claim 1, wherein
a content ratio of the polyolefin resin is 6% by mass or more and 94% by mass or less and
the content ratio of the (meth)acrylic resin is 6% by mass or more and 94% by mass or less with respect to the total amount of the polyolefin resin and the (meth)acrylic resin.

3. The laminate according to claim 1, wherein
a glass transition temperature of the (meth)acrylic resin is -60°C or more and 10°C or less.

4. The laminate according to claim 1, wherein
the gas barrier layer contains a gas barrier resin.

5. The laminate according to claim 4, wherein
the gas barrier resin contains a gas barrier polyurethane resin.

6. The laminate according to claim 5, wherein
the gas barrier polyurethane resin contains
a reaction product of an isocyanate group-terminated prepolymer and a chain extender,
the isocyanate group-terminated prepolymer contains a reaction product of a polyisocyanate component and an active hydrogen group-containing component,
the polyisocyanate component contains xylylene diisocyanate and/or hydrogenated xylylene diisocyanate,
the active hydrogen group-containing component contains a short-chain diol having 2 to 6 carbon atoms and an active hydrogen compound containing an anionic group.

7. The laminate according to claim 4, wherein
the gas barrier layer further contains a layered inorganic compound.

8. The laminate according to claim 1 further comprising:
a heat seal layer disposed on at least one side of the gas barrier layer.

9. A packaging material comprising the laminate according to claim 1.
